(19) Europäisches Patentamt
European Patent Office
Office européen des brevets

(11) **EP 4 814 049 A1**

(12) **EUROPEAN PATENT APPLICATION**
published in accordance with Art. 153(4) EPC

(43) Date of publication:
**30.09.2026 Bulletin 2026/40**

(21) Application number: **24894205.4**

(22) Date of filing: **21.11.2024**

(51) International Patent Classification (IPC):
***C08L 15/00*** (2006.01) ***C08J 3/20*** (2006.01)
***C08K 7/02*** (2006.01) ***C08L 1/00*** (2006.01)
***C08L 1/02*** (2006.01) ***C08L 7/00*** (2006.01)
***C08L 9/06*** (2006.01) ***C08L 21/00*** (2006.01)

(52) Cooperative Patent Classification (CPC):
**C08J 3/20; C08K 7/02; C08L 1/00; C08L 1/02; C08L 7/00; C08L 9/06; C08L 15/00; C08L 21/00**

(86) International application number:
**PCT/JP2024/041322**

(87) International publication number:
**WO 2025/110214 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.11.2023 JP 2023197432**
**05.03.2024 JP 2024033370**

(71) Applicant: **ASAHI KASEI KABUSHIKI KAISHA
Tokyo 100-0006 (JP)**

(72) Inventors:
- **KURISHITA, Yuka
Tokyo 100-0006 (JP)**
- **TARUTANI, Atsuyoshi
Tokyo 100-0006 (JP)**
- **BAMBA, Atsushi
Tokyo 100-0006 (JP)**
- **KATO, Sota
Tokyo 100-0006 (JP)**
- **KAWAHARA, Kazufumi
Tokyo 100-0006 (JP)**

(74) Representative: **D Young & Co LLP
3 Noble Street
London EC2V 7BQ (GB)**

(54) **RUBBER COMPOSITION CONTAINING CELLULOSE NANOFIBERS**

(57) The present invention provides: a rubber composition which is excellent in terms of dispersibility and orientation of cellulose nanofibers; a rubber composite; and a cured rubber product. One embodiment of the present invention provides a cured rubber product which exhibits good physical properties (in particular, tensile characteristics and modulus) and good surface smoothness. One embodiment of the present invention provides a rubber composition which contains cellulose nanofibers, a first rubber, and a second rubber, wherein: the first rubber is an unmodified liquid rubber; and the second rubber is a modified liquid rubber.

EP 4 814 049 A1

## Description

FIELD

One aspect of the present disclosure relates to a rubber composition comprising cellulose nanofibers.

BACKGROUND

Conventional rubber molded articles must exhibit high balance between a variety of physical properties such as mechanical strength, softness, abrasion resistance and workability, and it is therefore common to add fillers to rubber molded articles in order to improve their elastic modulus, hardness and abrasion resistance, for example. In order for rubber molded articles containing such fillers to exhibit their desired properties it is important for the fillers to be satisfactorily dispersed in the rubber. With increasing awareness of environmental issues in recent years, many attempts have been made to utilize cellulose, a material with low specific gravity and renewability, as a filler in rubber molded articles. Cellulose nanofibers are considered particularly promising as a filler for polymer molded articles, because of their satisfactory reinforcing effect per usage amount in polymer molded articles, when they are combined with different polymers to form polymer molded articles. The use of cellulose nanofibers in rubber molded articles is expected to provide rubber molded articles with low specific gravity and excellent physical properties, allowing them to be utilized for a wide variety of purposes with advantages in terms of transport cost and disposal cost. However, since cellulose nanofibers are essentially hydrophilic due to the hydroxyl groups in cellulose, it has been difficult to combine them with rubber, which is a highly hydrophobic material. Various attempts have therefore been made to improve the miscibility between cellulose nanofibers and rubber.

PTL 1, for example, describes a rubber composition for tires which comprises a rubber component, microfibrillated plant fibers that may be cellulose fibers, and a modifying agent that is covalently bondable with the microfibrillated plant fibers.

PTL 2 describes a rubber composition for tires which comprises 1 to 50 parts by mass of cellulose oxide nanofibers added to 100 parts by mass of diene rubber comprising at least 5 mass% of modified diene rubber which has polar groups in a proportion of 0.1 mol% or greater.

[CITATION LIST]

[PATENT LITERATURE]

[PTL 1] Japanese Unexamined Patent Publication No. 2020-41076
[PTL 2] Japanese Unexamined Patent Publication No. 2019-147877

SUMMARY

[TECHNICAL PROBLEM]

The techniques described in PTLs 1 and 2 are designed to disperse cellulose fibers in rubber compositions in order to improve the mechanical properties of the rubber compositions. Even with these techniques, however, the dispersibility of cellulose nanofibers in the rubber compositions is still inadequate, and room for improvement remains in terms of mechanical properties. In addition, when cellulose nanofibers are added to different types of molded articles, it is often desirable to obtain satisfactory surface smoothness, from the viewpoint of the outer appearance and slidability of the molded articles. In order to obtain satisfactory surface smoothness it is advantageous to properly orient the cellulose nanofibers within the molded articles. However, PTLs 1 and 2 do not specifically deal with the orientation of the cellulose nanofibers.

It is an object of the present invention to solve this problem by, according to one aspect, providing a rubber composition, a rubber composite and a cured rubber product with excellent dispersibility and orientation of cellulose nanofibers, and according to another aspect, providing a cured rubber product exhibiting satisfactory physical properties (especially tensile properties and modulus) and surface smoothness.

[SOLUTION TO PROBLEM]

Specifically, the present disclosure encompasses the following aspects.

[1] A rubber composition comprising cellulose nanofibers, a first rubber and a second rubber, wherein: the first rubber is unmodified liquid rubber and the second rubber is modified liquid rubber.
[2] The rubber composition according to [1], wherein at 38°C, the ratio $\eta_2/\eta_1$ of the viscosity $\eta 2$ of the second rubber with respect to the viscosity $\eta 1$ of the first rubber is 1.2 to 160.
[3] The rubber composition according to [1] or [2], wherein the number-average molecular weight of the second rubber is 4,500 to 100,000.
[4] The rubber composition according to any one of [1] to [3], which comprises the first rubber at 5 parts by mass to 300 parts by mass with respect to 100 parts by mass of the second rubber.
[5] The rubber composition according to any one of [1] to [4], which comprises the first rubber at 5 parts by mass to 100 parts by mass with respect to 100 parts by mass of the cellulose nanofibers.
[6] The rubber composition according to any one of [1] to [5], which comprises the second rubber at 10 parts by mass to 300 parts by mass with respect to 100 parts by mass of the cellulose nanofibers.
[7] The rubber composition according to any one of [1] to [6], which comprises the second rubber at 5 mass% to 60 mass%.
[8] The rubber composition according to any one of [1] to [7], wherein the first rubber comprises an aromatic vinyl monomer unit.
[9] The rubber composition according to any one of [1] to [8], wherein the second rubber is maleic anhydride-modified liquid polyisoprene.
[10] The rubber composition according to any one of [1] to [9], which further comprises a dispersing agent.
[11] The rubber composition according to [10], wherein the dispersing agent is nonionic.
[12] The rubber composition according to any one of [1] to [11], which further comprises a third rubber.
[13] The rubber composition according to [12], wherein the third rubber is natural rubber.
[14] The rubber composition according to any one of [1] to [11], which is a dried body.
[15] A method for producing a rubber composition according to any one of [1] to [14], the method comprising:

a first step in which cellulose nanofibers are mixed with the first rubber to obtain a preliminary composition, and
a second step in which the preliminary composition is mixed with the second rubber to obtain a rubber composition.

[16] A method for producing a rubber composition according to any one of [1] to [14], the method comprising:

a first step in which the first rubber is mixed with the second rubber to obtain a preliminary composition, and
a second step in which the preliminary composition is mixed with the cellulose nanofibers to obtain a rubber composition.

[17] The method according to [15] or [16], wherein the third rubber is further mixed in the second step.
[18] A method for producing a rubber composition according to [12] or [13], the method comprising:

a step of mixing cellulose nanofibers and the first rubber to obtain a preliminary composition,
a step of mixing the preliminary composition and the second rubber to obtain a dried body, and
a step of mixing the dried body and the third rubber to obtain a rubber composition.

[19] A method for producing a rubber composition according to [12] or [13], the method comprising:

a step of mixing the first rubber and the second rubber to obtain a preliminary composition,
a step of mixing the preliminary composition and the cellulose nanofibers to obtain a dried body, and
a step of mixing the dried body and the third rubber to obtain a rubber composition.

[20] A dried body comprising a rubber composition according to any one of [1] to [11].
[21] A method for producing a rubber composition, the method comprising a step of mixing the dried body according to [20] with a third rubber to obtain a rubber composition.
[22] The method according to [17], wherein the third rubber is natural rubber.
[23] The method according to [18], wherein the third rubber is natural rubber.
[24] The method according to [19], wherein the third rubber is natural rubber.
[25] The method according to [21], wherein the third rubber is natural rubber.
[26] A rubber composite which is a kneaded blend of a rubber composition according to any one of [1] to [14] and a fourth rubber.
[27] A cured rubber product, which is a cured product of a rubber composite according to [26].

[28] A tire comprising a cured rubber product according to [27].
[29] A rubber vibration isolator comprising a cured rubber product according to [27].
[30] A shoe outsole comprising a cured rubber product according to [27].
[31] A conveyor belt comprising a cured rubber product according to [27].

[ADVANTAGEOUS EFFECTS OF INVENTION]

The present invention, according to one aspect, can provide a rubber composition, a rubber composite and a cured rubber product with excellent dispersibility and orientation of cellulose nanofibers, and according to another aspect, it can provide a cured rubber product exhibiting satisfactory physical properties (especially tensile properties and modulus) and surface smoothness.

DESCRIPTION OF EMBODIMENTS

Exemplary embodiments of the invention (hereunder referred to as "embodiments") will now be described, with the understanding that these embodiments are in no way limitative on the invention. Unless otherwise specified, the property values mentioned throughout the present disclosure are values measured by the methods described herein under "Examples" or methods known to be equivalent to them by those skilled in the art.

<Rubber composition>

One aspect of the disclosure provides a rubber composition that comprises cellulose nanofibers, a first rubber, and a second rubber. According to one aspect, the first rubber and second rubber are both liquid rubber. Cellulose nanofibers are essentially hydrophilic due to their hydroxyl groups, but rubber is essentially hydrophobic, making it normally difficult to uniformly disperse cellulose nanofibers in rubber. As a result of much research, the present inventors have found that a combination of specific rubbers is useful for preparation of a rubber composition having excellent dispersibility for and orientation of cellulose nanofibers. The rubber composition may be in the form of a rubber master batch, for example, and kneaded with additional rubber to produce a rubber composite. The rubber composition, rubber composite or cured rubber product of the disclosure can exhibit the satisfactory dispersibility and orientation of cellulose nanofibers. This allows the cured rubber product of the disclosure to exhibit both satisfactory physical properties (especially tensile properties and modulus) and satisfactory surface smoothness.

According to one aspect, the first rubber is unmodified liquid rubber, and the second rubber is modified liquid rubber. Typically, of the first and second rubber, the second rubber is able to bond or interact with the cellulose nanofibers while the first rubber essentially does not exhibit such bonding or interaction. The second rubber can exhibit a satisfactory flow property due its state as liquid rubber, as well as functionality due to the presence of a modifying group. Such a second rubber is expected to exhibit an effect of improving the dispersibility of cellulose nanofibers in the third and/or fourth rubber of the disclosure. However, investigation by the present inventors has shown that using only the second rubber fails in some cases to produce the desired degree of effect of improving dispersibility of the cellulose nanofibers. Without being limited to any particular theory, it is believed that the modifying groups of the second rubber result in excessive local bonding or interaction between the modifying groups of the second rubber, or between the modifying groups of the second rubber and the hydroxyl groups of the cellulose nanofibers, whereby a dense structure is formed within the second rubber or between the second rubber and the cellulose nanofibers. In particular, a relatively high viscosity of the second rubber can potentially facilitate formation of a dense structure within the second rubber. When cellulose nanofibers are added to different types of molded articles, it is often desirable to obtain satisfactory surface smoothness, from the viewpoint of the outer appearance and slidability of the molded articles. In order to obtain satisfactory surface smoothness, therefore, it is advantageous to properly orient the cellulose nanofibers in the molded articles. Satisfactory mobility of the cellulose nanofibers in the rubber composition or in the rubber composite during production of the molded article will tend to result in satisfactory orientation of the cellulose nanofibers. However, production of such a dense structure can reduce the orientation of the cellulose nanofibers. As a result of further research, the present inventors found that the aforementioned problems can be solved by using the first rubber in addition to the second rubber. The first rubber has the advantage of excellent flow properties due to its state as liquid rubber, while also failing to form the dense structure described above since it lacks modifying groups. By infiltrating within the second rubber, or between the second rubber and cellulose nanofibers, the first rubber can help prevent the functional groups of the second rubber and the cellulose nanofibers from approaching too close to other functional groups. This will satisfactorily exhibit an effect of improving dispersibility of the cellulose nanofibers, as an advantage of the second rubber, thus helping to achieve satisfactory dispersibility and orientation of the cellulose nanofibers.

Each of the components of the rubber composition will now be explained. The amounts of each of the components in the rubber composition component mentioned as values for this embodiment may be considered to be

the amounts of the components in the rubber composition of the embodiment.

<Cellulose nanofibers>

Cellulose nanofibers are fibers that have been micronized by defibration treatment of a cellulose fiber starting material. The cellulose fiber starting material may be natural cellulose or regenerated cellulose. Natural cellulose includes wood pulp obtained from wood sources (broadleaf trees or conifers), nonwood pulp obtained from non-wood sources (cotton, bamboo, hemp, bagasse, kenaf, cotton linter, sisal and straw), and cellulose fiber aggregates obtained from sources such as animals (such as sea squirts) and algae, or produced by microbes (such as acetic acid bacteria). Regenerated cellulose to be used may be regenerated cellulose fibers (such as viscose, cupra and Tencel), cellulose derivative fibers, or superfine yarn of regenerated cellulose or cellulose derivatives, obtained by electrospinning methods.

According to one aspect, the defibration is dry or wet mechanical treatment, and preferably it is wet treatment in which a slurry obtained by dispersing the cellulose fiber starting material in a liquid medium is subjected to mechanical treatment. The defibration may be carried out using a single apparatus one or more times, or a plurality of apparatuses, each one or more times. The apparatus used for defibration is not particularly restricted, and for example, it may be a high-speed rotation type, colloid mill type, high-pressure type, roll mill type or ultrasonic type of apparatus, such as a high-pressure or ultrahigh-pressure homogenizer, refiner, beater, PFI mill, kneader, disperser, high-speed defibrator, grinder (stone mill crusher), ball mill, vibrating mill, bead mill, conical refiner, disc refiner, or a single-screw, twin-screw or multi-screw kneader or extruder.

The cellulose fiber starting material may also be supplied to pretreatment before defibration. Pretreatment can accomplish adjustment of the fiber diameter, fiber length and fibrillation degree, or adjustment of the contents of components other than cellulose (including acid-insoluble components such as lignin and alkali-soluble polysaccharides such as hemicellulose), or adjustment of the molecular weight and degree of crystallinity.

According to one aspect, the pretreatment may be of one or more types selected from among chemical treatment, pulverizing, grinding and classification. Chemical treatment is treatment using chemicals, examples of which include digestion, bleaching, purification, hydrolysis, enzymatic treatment, regenerated cellulose treatment and chemical modification. Pulverizing is treatment in which the cellulose fiber starting material is pulverized in a dry system. Grinding is treatment in which a slurry obtained by dispersing the cellulose fiber starting material in a liquid medium is subjected to pulverizing treatment, being distinguished from pulverizing in that it is carried out in a wet system. Classification is a separation procedure for alignment of the fiber lengths of a cellulose fiber starting material, and it may be dry classification or wet classification.

The liquid medium may be water and/or another medium (for example, an organic solvent, inorganic acid, base and/or ionic liquid), and it may include one or more different media.

Examples of organic solvents include one or more commonly used organic solvents from among: alcohols (such as methanol, ethanol, *n*-propanol, *i*-propanol, *n*-butanol, *i*-butanol, s-butanol, *t*-butanol, ethylene glycol, diethylene glycol and glycerin); ethers (such as propyleneglycol monomethyl ether, 1,2-dimethoxyethane, diisopropyl ether, tetrahydrofuran and 1,4-dioxane); carboxylic acids (such as formic acid, acetic acid and lactic acid); esters (such as ethyl acetate and vinyl acetate); ketones (such as acetone, methyl ethyl ketone, methyl isobutyl ketone, cyclopentanone and cyclohexanone); nitrogen-containing solvents (such as dimethylformamide, dimethylacetamide and acetonitrile); and sulfur-containing solvents (such as dimethyl sulfoxide). According to a typical aspect, the liquid medium in the slurry consists essentially of water.

[Specific surface area]

From the viewpoint of satisfactorily obtaining an effect of improved physical properties due to the cellulose nanofibers, the specific surface area of the cellulose nanofibers is preferably 2 $m^2/g$ or greater, preferably 3 $m^2/g$ or greater, preferably 5 $m^2/g$ or greater, preferably 7 $m^2/g$ or greater, preferably 10 $m^2/g$ or greater, preferably 12 $m^2/g$ or greater, preferably 15 $m^2/g$ or greater, preferably 17 $m^2/g$ or greater, preferably 20 $m^2/g$ or greater, preferably 22 $m^2/g$ or greater, preferably 25 $m^2/g$ or greater and preferably 27 $m^2/g$ or greater. From the viewpoint of satisfactory dispersion of the cellulose nanofibers in the rubber composition and cured rubber product, it is preferably 400 $m^2/g$ or lower, preferably 350 $m^2/g$ or lower, preferably 300 $m^2/g$ or lower, preferably 250 $m^2/g$ or lower, preferably 200 $m^2/g$ or lower, preferably 170 $m^2/g$ or lower, preferably 150 $m^2/g$ or lower, preferably 120 $m^2/g$ or lower and preferably 100 $m^2/g$ or lower.

The specific surface area of the cellulose nanofibers is measured as the BET specific surface area of a porous sheet of the cellulose nanofibers, using nitrogen gas in a specific surface area/pore distribution measuring apparatus (for example, a Nova-4200e by Quantachrome Instruments). Specifically, approximately 0.2 g of the porous sheet is dried in a vacuum at 120°C for 5 hours, after which the nitrogen gas adsorption at the boiling point of liquid nitrogen is measured at 5 points (multipoint method) in a relative vapor pressure (P/P0) range of 0.05 to 0.2, and the BET specific surface area ($m^2/g$) is calculated using the program for the apparatus.

The porous sheet is fabricated by the method described below under [Porous sheet].

The specific surface area of the cellulose nanofibers can be calculated as the equivalent fiber diameter of the cellulose nanofibers by the following formula, assuming the cellulose nanofibers to be cylindrical.

Since the density of cellulose is 1.5 (g/cm$^3$), the volume per 1 g of cellulose is $6.7 \times 10^{-7}$ (m$^3$/g).

If the equivalent fiber diameter of the cellulose nanofibers is represented as r (m), then the average circumference length of the cellulose nanofibers = $\pi r$ and the average cross-sectional area of the cellulose nanofibers = $0.25\pi r^2$, so that total fiber length per 1 g of cellulose nanofibers = $6.7 \times 10^{-7}$ (m$^3$/g)/average cross-sectional area (= $0.25\pi r^2$).

Total surface area = Specific surface area (m$^2$/g) = $6.7 \times 10^{-7}$ (m$^3$/g)/average cross-sectional area (= $0.25\pi r^2$) $\times$ average circumference length (= $\pi r$) = $6.7 \times 10^{-7}$ (m$^3$/g)/0.25 r = $26.68 \times 10^{-7}$ (m$^3$/g)/r

Therefore,

$$\text{Equivalent fiber diameter r (m)} = 26.68 \times 10^{-7}\ (\text{m}^3/\text{g})/\text{specific surface area}\ (\text{m}^2/\text{g}),$$

and for example, the equivalent fiber diameter r of cellulose nanofibers with a BET specific surface area of 40 m$^2$ in a porous sheet is calculated to be 66.7 nm.

According to one aspect, the equivalent fiber diameter of the cellulose nanofibers is preferably 2 to 1000 nm from the viewpoint of obtaining a satisfactory improving effect on the physical properties by the cellulose nanofibers. The equivalent fiber diameter of the cellulose nanofibers is more preferably 4 nm or greater, 5 nm or greater, 10 nm or greater, 15 nm or greater or 20 nm or greater, and more preferably 900 nm or smaller, 800 nm or smaller, 700 nm or smaller, 600 nm or smaller, 500 nm or smaller, 400 nm or smaller, 300 nm or smaller or 200 nm or smaller.

According to one aspect, the number-average fiber length L of the cellulose nanofibers is preferably 100 nm or larger, 500 nm or larger, 1 μm or larger, 5 μm or larger, 10 μm or larger or 20 μm or larger, from the viewpoint of satisfactorily exhibiting an effect of improvement in physical properties by the cellulose nanofibers, and preferably 1000 μm or smaller, 800 μm or smaller, 500 μm or smaller, 400 μm or smaller, 300 μm or smaller or 200 μm or smaller, from the viewpoint of satisfactorily dispersing the cellulose nanofibers in the resin composition.

According to one aspect, the number-average fiber diameter D of the cellulose nanofibers is preferably 2 to 1000 nm from the viewpoint of obtaining a satisfactory effect of improving the physical properties by the cellulose nanofibers. The number-average fiber diameter of the cellulose nanofibers is more preferably 4 nm or greater, 5 nm or greater, 10 nm or greater, 15 nm or greater or 20 nm or greater, and more preferably 900 nm or smaller, 800 nm or smaller, 700 nm or smaller, 600 nm or smaller, 500 nm or smaller, 400 nm or smaller, 300 nm or smaller or 200 nm or smaller.

The mean fiber length (L)/fiber diameter (D) ratio of the cellulose nanofibers is preferably 30 or greater, 50 or greater, 80 or greater, 100 or greater, 120 or greater or 150 or greater, from the viewpoint of satisfactorily improving the mechanical properties of the rubber composite containing the cellulose nanofibers, using a small amount of cellulose nanofibers. The upper limit is not particularly restricted but is preferably 5000 or lower, 3000 or lower, 2000 or lower or 1000 or lower, from the viewpoint of handleability.

For the purpose of the disclosure, the fiber length, fiber diameter and L/D ratio of the cellulose nanofibers are the values measured by the following procedure using a scanning electron microscope (SEM). The aqueous dispersion of cellulose nanofibers is solvent-exchanged with *tert*-butanol, diluted to 0.001 to 0.1 mass%, and dispersed using a high-shear homogenizer (such as an "ULTRA-TURRAX T18", trade name of IKA Corp.) with treatment conditions of 15,000 rpm × 3 min, cast onto an osmium-vapor deposited silicon substrate and air-dried, and then dried for use as a measuring sample and measured with a high-resolution scanning electron microscope (SEM). Specifically, the length (L) and diameter (D) of 100 randomly selected cellulose nanofibers are measured in an observation field with the magnification adjusted so as to observe at least 100 cellulose nanofibers, and the ratio (L/D) is calculated. The number-average values are recorded as the number-average fiber diameter L and number-average fiber diameter D, and the ratio (L/D) is calculated.

The known crystalline forms of cellulose include type I, type II, type III and type IV, among which type I and type II are most commonly used, whereas type III and type IV are not commonly used on an industrial scale but have been obtained on a laboratory scale. The cellulose nanofibers of the disclosure are preferably cellulose nanofibers containing type I cellulose crystals or type II cellulose crystals, for relatively high mobility in terms of structure and to obtain a molded article with a lower coefficient of linear expansion and more excellent strength and elongation when subjected to stretching or bending deformation, by dispersion of the cellulose nanofibers in the rubber, and more preferably the cellulose nanofibers comprise type I cellulose crystals and have a degree of crystallinity of 55% or higher.

The degree of crystallinity of the cellulose nanofibers is preferably 55% or greater. A greater degree of crystallinity results in higher mechanical properties (strength and dimensional stability) of the cellulose itself, so that when the cellulose nanofibers are dispersed in rubber, the strength and dimensional stability of the rubber composite also tends to be high. A

more preferred lower limit for the degree of crystallinity is 60%, preferably 70% and most preferably 80%. The upper limit for the degree of crystallinity of the cellulose nanofibers is not particularly restricted, with a higher degree being preferred, but from the viewpoint of productivity the preferred upper limit is 99%.

When the cellulose nanofibers are type I cellulose crystals (derived from natural cellulose), the degree of crystallinity referred to here is that determined by the following formula, from the diffraction pattern (2θ/deg. = 10 to 30) obtained by measurement of the sample by wide-angle X-ray diffraction, based on the Segal method.

$$\text{Degree of crystallinity (\%)} = [I_{(200)} - I_{(amorphous)}]/I_{(200)} \times 100$$

$I_{(200)}$: Diffraction peak intensity at 200 plane (2θ = 22.5°) for type I cellulose crystal $I_{(amorphous)}$: Amorphous halo peak intensity for type I cellulose crystal, peak intensity at angle of 4.5° lower than diffraction angle at 200 plane (2θ = 18.0°).

When the cellulose is type II cellulose crystals (derived from regenerated cellulose), the degree of crystallinity is determined by the following formula, from the absolute peak intensity h0 at 20 = 12.6° attributed to the (110) plane peak of the type II cellulose crystals, and the peak intensity h1 of the baseline at the interplanar spacing (line connecting 2θ = 8° and 15°), in wide-angle X-ray diffraction.

$$\text{Degree of crystallinity (\%)} = (h0 - h1)/h0 \times 100$$

The degree of polymerization of the cellulose nanofibers is preferably 100 or greater, more preferably 150 or greater, even more preferably 200 or greater, yet more preferably 300 or greater, even yet more preferably 400 or greater, and most preferably 450 or greater, and preferably 3500 or lower, more preferably 3300 or lower, even more preferably 3200 or lower, yet more preferably 3100 or lower and most preferably 3000 or lower.

The degree of polymerization of the cellulose nanofibers is preferably within this range from the viewpoint of workability and mechanical properties. The degree of polymerization is preferably not too high from the viewpoint of workability, and it is preferably not too low from the viewpoint of exhibiting mechanical properties.

The degree of polymerization of the cellulose nanofibers is the mean polymerization degree measured by a reduced relative viscosity method using a copper-ethylenediamine solution, as described in Verification Test (3) of "Japanese Pharmacopeia, 15th Edition Reference Manual (Hirokawa Shoten)".

According to one aspect, the weight-average molecular weight (Mw) of the cellulose nanofibers is 100,000 or greater and preferably 200,000 or greater. The ratio (Mw/Mn) of the weight-average molecular weight and number-average molecular weight (Mn) is 6 or lower, and preferably 5.6 or lower or 5.4 or lower. A higher weight-average molecular weight means a lower number of terminal groups of the cellulose molecules. Since the ratio (Mw/Mn) of the weight-average molecular weight and number-average molecular weight represents the width of the molecular weight distribution, a smaller Mw/Mn means a lower number of ends of cellulose molecules. The ends of the cellulose molecules are origins for thermal decomposition, and consequently it is not sufficient for the cellulose molecules of the cellulose nanofibers to merely have high weight-average molecular weight, but if a high weight-average molecular weight is combined with a more narrow width for the molecular weight distribution, it will be possible to obtain especially high heat resistance for the cellulose nanofibers, and for a rubber composition comprising the cellulose nanofibers and rubber. The weight-average molecular weight (Mw) of the cellulose nanofibers may be 600,000 or lower, 500,000 or lower, or 400,000 or lower, for example, from the viewpoint of greater availability of the cellulose starting material. The number-average molecular weight (Mn) of the cellulose nanofibers may be 200,000 or lower, 150,000 or lower, 100,000 or lower, 80,000 or lower or 60,000 or lower, for example, from the viewpoint of greater availability of the cellulose fiber starting material. The ratio (Mw/Mn) of the weight-average molecular weight and number-average molecular weight (Mn) may be 1.5 or higher, 1.7 or higher or 2 or higher, for example, from the viewpoint of easier production of the cellulose nanofibers. The Mw can be controlled to within this range by selecting a cellulose starting material having the desired Mw, or by carrying out appropriate physical treatment and/or chemical treatment of the cellulose starting material. The Mw/Mn ratio can also be controlled to within this range by selecting a cellulose starting material having the desired Mw/Mn ratio, or by carrying out appropriate physical treatment and/or chemical treatment of the cellulose starting material. The Mw and Mw/Mn of the cellulose starting material may be in the ranges specified above, according to one aspect.

The weight-average molecular weight and number-average molecular weight of the cellulose nanofibers referred to here are the values determined after dissolving the cellulose nanofibers in lithium chloride-added N,N-dimethylacetamide, and then performing gel permeation chromatography with N,N-dimethylacetamide as the solvent.

Alkali-soluble polysaccharides in the cellulose nanofibers include β-cellulose and γ-cellulose, in addition to hemicellulose. Alkali-soluble polysaccharides are understood by those skilled in the art to consist of the components that are obtained as the alkali-soluble portion of holocellulose (that is, the components other than α-cellulose in holocellulose), upon solvent extraction and chlorine treatment of a plant (such as wood). Since alkali-soluble polysaccharides consist of hydroxyl group-containing polysaccharides with poor heat resistance, which can lead to inconveniences such as

decomposition when subjected to heat, yellowing due to heat aging and reduced strength of the cellulose nanofibers, it is preferred to have a lower alkali-soluble polysaccharide content in the cellulose nanofibers.

According to one aspect, the average content of alkali-soluble polysaccharides in the cellulose nanofibers is preferably 20 mass% or lower, 18 mass% or lower, 15 mass% or lower or 12 mass% or lower with respect to 100 mass% of the cellulose nanofibers, from the viewpoint of obtaining satisfactory dispersibility for the cellulose nanofibers. The content may also be 1 mass% or greater, 2 mass% or greater or 3 mass% or greater from the viewpoint of facilitating production of the cellulose nanofibers.

The average content of alkali-soluble polysaccharides can be determined by a method described in non-patent literature (Mokushitsu Kagaku Jikken Manual, ed. The Japan Wood Research Society, pp.92-97, 2000), subtracting the $\alpha$-cellulose content from the holocellulose content (Wise method). In the technical field this method is understood to be a method of measuring hemicellulose content. The alkali-soluble polysaccharide content is calculated 3 times for each sample, and the number average for the calculated alkali-soluble polysaccharide contents is recorded as the average alkali-soluble polysaccharide content.

According to one aspect, the average content of the acid-insoluble component in the cellulose nanofibers is preferably 10 mass% or lower, 5 mass% or lower or 3 mass% or lower with respect to 100 mass% of the cellulose nanofibers, from the viewpoint of avoiding reduction in heat resistance and resulting discoloration of the cellulose nanofibers. The content may also be 0.1 mass% or greater, 0.2 mass% or greater or 0.3 mass% or greater from the viewpoint of facilitating production of the cellulose nanofibers.

The average content of the acid-insoluble component is quantified using the Klason method, described in non-patent literature (Mokushitsu Kagaku Jikken Manual, ed. The Japan Wood Research Society, pp.92-97, 2000). In the technical field this method is understood to be a method of measuring lignin content. The sample is stirred in a sulfuric acid solution to dissolve the cellulose and hemicellulose, and then filtered with glass fiber filter paper, and the obtained residue is used as the acid-insoluble component. The acid-insoluble component content is calculated from the weight of the acid-insoluble component. The acid-insoluble component content is measured 3 times for each sample, and the number average is recorded as the average content for the acid-insoluble component.

[Chemical modification]

The cellulose nanofibers may be chemically modified cellulose nanofibers. Examples of chemically modified cellulose nanofibers include inorganic ester compounds such as nitric acid esters, sulfuric acid esters, phosphoric acid esters, silicic acid esters and boric acid esters, acetylated or propionylated organic ester compounds, etherified compounds such as methyl ethers, hydroxyethyl ethers, hydroxypropyl ethers, hydroxybutyl ethers, carboxymethyl ethers and cyanoethyl ethers, and TEMPO oxidation products obtained by oxidation of the primary hydroxyl group of cellulose. The chemically modified cellulose nanofibers may also comprise one or more modifying groups.

According to a preferred aspect, the chemical modification is acylation, and especially acetylation, using an esterifying agent. Preferred esterifying agents are acid halides, acid anhydrides, vinyl carboxylate esters and carboxylic acids. Particularly preferred among these esterification reactants are one or more selected from the group consisting of acetic anhydride, propionic anhydride, butyric anhydride, vinyl acetate, vinyl propionate, vinyl butyrate and acetic acid, among which acetic anhydride and vinyl acetate are especially preferred from the viewpoint of reaction efficiency. The cellulose nanofibers may be chemically modified with a modifying agent at the stage of the cellulose fiber starting material, during defibration treatment or after defibration treatment, for example, or they may be chemically modified as a dispersion, either during or after preparation of the slurry, or during or after the drying step.

[Acyl group degree of substitution (DS)]

If the cellulose nanofibers are chemically modified (by hydrophobizing such as acylation, for example), the dispersibility of the cellulose nanofibers in the rubber will tend to be satisfactory. If this is combined with a dispersing agent, on the other hand, it will be easier to exhibit satisfactory dispersibility in rubber even when the cellulose nanofibers are unsubstituted or low-substituted. When the cellulose nanofibers are esterified cellulose nanofibers, the acyl group degree of substitution (DS) is preferably 0.1 or greater, 0.2 or greater, 0.25 or greater, 0.3 or greater or 0.5 or greater, from the viewpoint of obtaining esterified cellulose nanofibers with a high thermal decomposition initiation temperature, and the acyl degree substitution is preferably 2.0 or lower, 1.8 or lower, 1.5 or lower, 1.2 or lower, 1.0 or lower, 0.8 or lower, 0.7 or lower, 0.6 or lower or 0.5 or lower, from the viewpoint of obtaining esterified cellulose nanofibers exhibiting high tensile strength and dimensional stability provided by the cellulose since unmodified cellulose backbone remains in the esterified cellulose nanofibers, as well as a high thermal decomposition initiation temperature provided by the chemical modification.

When the modifying groups on the chemically modified cellulose nanofibers are acyl groups, the acyl group degree of substitution (DS) can be calculated based on the peak intensity ratio between the acyl group-derived peak and the cellulose backbone-derived peak, in the reflective infrared absorption spectrum of the esterified cellulose nanofibers.

The peak of the absorption band for C=O based on acyl groups appears at 1730 $cm^{-1}$, while the peak of the absorption band for C-O based on the cellulose backbone chain appears at 1030 $cm^{-1}$. The DS of esterified cellulose nanofibers can be calculated using a calibration curve following:

$$\text{Degree of substitution DS} = 4.13 \times \text{IR index (1030)},$$

derived from a correlation graph drawn between DS obtained from solid NMR measurement of the esterified cellulose nanofibers described below, and the modification rate (IR index 1030), defined by the ratio of the peak intensity of the absorption band for C=O based on acyl groups with respect to the peak intensity of the absorption band for C-O of the cellulose backbone chain.

$$\text{IR Index (1030)} = \text{H1730/H1030}$$

In the formula, H1730 and H1030 are the absorbances at 1730 $cm^{-1}$ and 1030 $cm^{-1}$ (absorption bands for C-O stretching vibration of the cellulose backbone chain). The respective baselines used were a line connecting 1900 $cm^{-1}$ and 1500 $cm^{-1}$ and a line connecting 800 $cm^{-1}$ and 1500 $cm^{-1}$, each baseline being defined as the absorbance at absorbance = 0.

The method of determining DS for the esterified cellulose nanofibers by solid NMR may be $^{13}C$ solid NMR measurement of the freeze-shattered esterified cellulose nanofibers, followed by calculating the value obtained by the following formula using the area intensity (Inf) of the signal attributed to one carbon atom of the modifying group, with respect to the total area intensity (Inp) of the signals attributed to $C_1$-$C_6$ carbons of the pyranose rings of cellulose, appearing in the range of 50 ppm to 110 ppm.

$$\text{DS} = (\text{Inf}) \times 6/(\text{Inp})$$

When the modifying group is acetyl, for example, the signal at 23 ppm attributed to $-CH_3$ may be used.

The conditions for the $^{13}C$ solid NMR measurement may be the following, as an example.

Apparatus: Bruker Biospin Avance 500WB
Frequency: 125.77 MHz
Measuring method: DD/MAS
Latency time: 75 sec
NMR sample tube: 4 mmφ
Number of scans: 640 (~14 hr)
MAS: 14,500 Hz
Chemical shift reference: glycine (external reference: 176.03 ppm)

According to one aspect, the thermal decomposition initiation temperature ($T_D$) of the cellulose nanofibers is preferably 200°C or higher, 210°C or higher, 220°C or higher, 230°C or higher, 240°C or higher, 250°C or higher, 260°C or higher, 270°C or higher, 275°C or higher, 280°C or higher or 285°C or higher, from the viewpoint of allowing the desired heat resistance and mechanical strength to be exhibited for on-vehicle purposes. While a higher thermal decomposition initiation temperature is preferred, it is also 320°C or lower, 310°C or lower or 300°C or lower from the viewpoint of easier production of the cellulose nanofibers.

[1% weight loss temperature ($T_{1\%}$) and 250°C weight loss ($T_{250°C}$)]

The temperature at 1 wt% weight loss ($T_{1\%}$) of the cellulose nanofibers is preferably 230°C or higher, 240°C or higher, 250°C or higher, 260°C or higher, 270°C or higher, 275°C or higher, 280°C or higher, 285°C or higher or 290°C or higher, according to one aspect, from the viewpoint of avoiding heat degradation during melt kneading and shaping and allowing mechanical strength to be exhibited. While a higher $T_{1\%}$ is preferred, it is also 330°C or lower, 320°C or lower or 310°C or lower, from the viewpoint of easier production of the cellulose nanofibers.

According to one aspect, the 250°C weight loss ($T_{250°C}$) of the cellulose nanofibers is preferably 15% or lower, 12% or lower, 10% or lower, 8% or lower, 6% or lower, 5% or lower, 4% or lower or 3% or lower, from the viewpoint of avoiding heat degradation during melt kneading and allowing mechanical strength to be exhibited. While a lower $T_{250°C}$ is preferred, it may be 0.1% or higher, 0.5% or higher, 0.7% or higher or 1.0% or higher, for example, from the viewpoint of easier production of the cellulose nanofibers.

For the purpose of the disclosure, the $T_D$ is the value determined from a graph obtained by thermogravimetry (TG) analysis, where the abscissa is temperature and the ordinate is weight retention %. Starting from the weight of cellulose nanofibers at 150°C (with essentially all of the moisture content removed) (0 wt% weight loss ) and increasing the

temperature, a straight line is obtained running through the temperature at 1 wt% weight loss ($T_{1\%}$) and the temperature at 2 wt% weight loss ($T_{2\%}$). The temperature at the point of intersection between this straight line and a horizontal (baseline) running through the origin at weight loss 0 wt%, is defined as $T_D$.

The 1% weight loss temperature ($T_{1\%}$) is the temperature at 1 wt% weight loss with the 150°C weight as the origin, after continuous temperature increase by the method for $T_D$ described above.

The 250°C weight loss ($T_{250°C}$) of the cellulose nanofibers is the weight loss by TG analysis when the cellulose nanofibers have been stored for 2 hours at 250°C under a nitrogen flow. After increasing the temperature of a porous sheet of the cellulose nanofibers from room temperature to 150°C at a temperature-elevating rate of 10°C/min under a nitrogen flow of 100 ml/min and holding this state at 150°C for 1 hour, the temperature is further increased from 150°C to 250°C at a temperature-elevating rate of 10°C/min, and held in that state at 250°C for 2 hours. Calculation is by the following formula using the weight upon reaching 250°C as the starting point WO, and the weight after holding at 250°C for 2 hours as W1.

$$250°\text{C Weight change rate (\%)}: (W1 - W0)/W0 \times 100$$

[Porous sheet]

Measurement of the physical properties of the cellulose nanofibers (specific surface area, degree of crystallinity, crystal polymorphism, polymerization degree, Mw, Mn and Mw/Mn, alkali-soluble portion content, average content of acid-insoluble components, $T_D$, $T_{1\%}$ and $T_{250°C}$) may vary significantly in their numerical values, depending on the form of the measuring sample. A porous sheet without distortion was used as the measuring sample for more stable reproducibility of measurement. The method of fabricating the porous sheet is as follows.

First, a concentrated cake of cellulose nanofibers with a solid content of 10 mass% or greater, with water as the liquid medium, is added to *tert*-butanol, and dispersion treatment is carried out with a mixer (for example, a high-shear homogenizer (such as "ULTRA-TURRAX T18", trade name of IKA Corp., treatment conditions: rotational speed = 15,000 rpm × 3 min)) until aggregates are no longer present. The mixture is then prepared to a concentration of 0.5 mass% for 0.5 g of cellulose nanofiber solid weight. A 100 g portion of the obtained *tert*-butanol dispersion is filtered on filter paper. Without being released from the filter paper, the filtered substance together with the filter paper is sandwiched by two larger filter paper sheets, and dried for 5 minutes in an oven at 150°C while pressing the edges of the larger filter paper with a weight from above. The filter paper is then released to obtain a porous sheet without distortion. Sheets with air permeability resistance R up to 100 sec/100 ml per 10 g/$m^2$ basis weight of the sheet are considered to be porous sheets, and are used as measuring samples.

For measurement of the air permeability resistance R, the basis weight W (g/$m^2$) of each porous sheet sample that has been left to stand for 1 day in an environment of 23°C, 50% RH is measured, and then an Oken-type air permeability resistance tester (Model EG01 by Asahi Seiko Co., Ltd.) is used to measure the air permeability resistance R (sec/100 ml). The value per 10 g/$m^2$ basis weight is calculated by the following formula.

$$\text{Air permeability resistance (sec/100 ml) per 10 g/m}^2\text{ basis weight} = R/W \times 10$$

The physical properties of the cellulose nanofibers in the rubber composition or rubber composite (the number-average fiber length, number-average fiber diameter, L/D ratio, degree of crystallinity, crystal polymorphism, polymerization degree, Mw, Mn, Mw/Mn, alkali-soluble portion content, average content of acid-insoluble components, $T_D$, $T_{1\%}$, $T_{250°C}$ and DS) are analyzed by the following methods.

The polymer component in the rubber composition or rubber composite is dissolved in an organic or inorganic solvent capable of dissolving the polymer component, the cellulose nanofibers are separated off and thoroughly rinsed with the solvent, and then the solvent is exchanged with *tert*-butanol. The *tert*-butanol slurry of the cellulose nanofibers is then analyzed by the same measuring methods described above, and the physical properties of the cellulose nanofibers in the rubber composition or rubber composite are calculated.

According to one aspect, the cellulose nanofibers may be supplied in the form of a slurry comprising a liquid medium, or in a dried form such as particles, a film or bulk. The liquid medium may be water and/or an organic solvent with a boiling point, and it may comprise one or more different media. The slurry form has a liquid medium content of 50 mass% or greater, and a liquid medium content of less than 50 mass% in the dried material. The liquid medium content is the value measured upon heating at 180°C using an infrared heating moisture meter (for example, a "MX-50", trade name of A&D Co., Ltd.).

<First rubber and second rubber>

According to one aspect, the first rubber is unmodified liquid rubber, and the second rubber is modified liquid rubber. For the purpose of the disclosure, "liquid rubber" is a substance having a flow property at 23°C and forming a rubber elastomer by crosslinking (more specifically, vulcanization) and/or chain extension. That is, according to one aspect the liquid rubber is uncured. Having a "flow property" means, according to one aspect, that when the liquid rubber that has been dissolved in cyclohexane is placed in a vial with dimensions of 21 mm torso diameter × 50 mm full length at 23°C and then dried, causing the liquid rubber to fill the vial up to a height of 1 mm, and the vial is then closed shut, vertically inverted and allowed to stand for 24 hours, the substance can be observed to move at least 0.1 mm in the height direction. The liquid rubber may be a common rubber monomer composition, and it preferably has a relatively low molecular weight from the viewpoint of easier handleability and obtaining satisfactory dispersibility of the cellulose nanofibers. According to one aspect, the liquid rubber is in liquid form with a number-average molecular weight (Mn) of 150,000 or lower. For the purpose of the disclosure, the molecular weight and molecular weight distribution of the rubber component are values obtained by measuring the chromatogram by gel permeation chromatography with three linked columns packed with polystyrene gel, and performing calculation with a calibration curve using standard polystyrene. The solvent used is tetrahydrofuran.

When the rubber composition is cured to obtain a cured rubber product, the liquid rubber is preferably vulcanized during curing from the viewpoint of improving the mechanical properties of the cured rubber product. Alternatively, the liquid rubber may be cured by a method such as heating.

From the viewpoint of satisfactorily obtaining the mechanical properties of the rubber composition, rubber composite or cured rubber product, the number-average molecular weight of the first rubber is preferably 1,000 or higher, 1,500 or higher or 2,000 or higher, while from the viewpoint of the flow property and the viewpoint of obtaining a cured rubber product with satisfactory rubber elasticity without excessive hardness, it is preferably 150,000 or lower, 145,000 or lower or 140,000 or lower.

From the viewpoint of satisfactorily obtaining the mechanical properties of the rubber composition, rubber composite or cured rubber product, the number-average molecular weight of the second rubber is preferably 4,500 or higher, 5,000 or higher or 5,500 or higher, while from the viewpoint of the flow property and the viewpoint of obtaining a cured rubber product with satisfactory rubber elasticity without excessive hardness, it is preferably 100,000 or lower, 90,000 or lower or 80,000 or lower.

From the viewpoint of the flow property, and from the viewpoint of obtaining a cured rubber product with satisfactory rubber elasticity without excessive hardness, the viscosity $\eta 1$ of the first rubber at 38°C is preferably 100,000 mPa·s or lower, 95,000 mPa·s or lower or 90,000 mPa·s or lower, while from the viewpoint of obtaining satisfactory mechanical properties for the rubber composition, rubber composite or cured rubber product it is preferably 5,000 mPa·s or higher, 8,000 mPa·s or higher or 10,000 mPa·s or higher.

From the viewpoint of the flow property, and from the viewpoint of obtaining a cured rubber product with satisfactory rubber elasticity without excessive hardness, the viscosity $\eta 2$ of the second rubber at 38°C is preferably 800,000 mPa·s or lower, 700,000 mPa·s or lower or 600,000 mPa·s or lower, while from the viewpoint of obtaining satisfactory mechanical properties for the rubber composition, rubber composite or cured rubber product it is preferably 100,000 mPa·s or higher, 120,000 mPa·s or higher or 140,000 mPa·s or higher.

For the purpose of the disclosure, the viscosity is the value measured using a Brookfield viscometer.

At 38°C the ratio $\eta 2/\eta 1$ of the viscosity $\eta 2$ of the second rubber with respect to the viscosity $\eta 1$ of the first rubber is preferably 1.2 or higher, 1.3 or higher or 1.4 or higher, from the viewpoint of facilitating infiltration of the first rubber within the second rubber or between the second rubber and the cellulose nanofibers, and preferably 160 or lower, 140 or lower or 120 or lower, from the viewpoint of obtaining satisfactory affinity between the first rubber and second rubber.

The liquid rubber may be a conjugated diene-based polymer, a non-conjugated diene-based polymer, or a hydrogenated product of the same. The polymer or its hydrogenated product may also be an oligomer.

[Conjugated diene-based polymer]

The conjugated diene-based polymer may be a homopolymer or a copolymer of two or more conjugated diene monomers, or a copolymer of a conjugated diene monomer and another monomer. The copolymer may be either random or block.

Conjugated diene monomers include 1,3-butadiene, isoprene, 2,3-dimethyl-1,3-butadiene, 1,3-pentadiene, 3-methyl-1,3-pentadiene, 1,3-heptadiene and 1,3-hexadiene, and any one of these or a combination of two or more may be used.

According to one aspect, the conjugated diene-based polymer is a copolymer of a conjugated diene monomer and an aromatic vinyl monomer.

Aromatic vinyl monomers are not particularly restricted so long as they are monomers that are copolymerizable with conjugated diene monomers, and examples include styrene, *m*- or *p*-methylstyrene, $\alpha$-methylstyrene, ethylstyrene,

*p*-*tert*-butylstyrene, vinylethylbenzene, vinylxylene, vinylnaphthalene, diphenylethylene and divinylbenzene, among which any one or combination of two or more may be used. Styrene is preferred from the viewpoint of molding workability of the rubber composition and impact resistance of the molded article.

Random copolymers include butadiene-isoprene random copolymer, butadiene-styrene random copolymer, isoprene-styrene random copolymer and butadiene-isoprene-styrene random copolymer. The compositional distribution of each monomer in the copolymer chain may be that of a completely random copolymer having a nearly statistically random composition, or of a tapered (gradient) random copolymer having a gradient in the compositional distribution. A composition with a conjugated diene-based polymer bond form, i.e. 1,4-bonds or 1,2-bonds, may have uniform or different molecules.

A block copolymer may be a copolymer composed of two or more blocks. An example is a block copolymer in which block A as an aromatic vinyl monomer and block B as a conjugated diene monomer block and/or an aromatic vinyl monomer and conjugated diene monomer copolymer block, form the structure A-B, A-B-A or A-B-A-B. There is no essential need for distinct block borders, and for example, when block B is a copolymer of an aromatic vinyl monomer and a conjugated diene monomer, the aromatic vinyl monomer in block B may be distributed in a uniform or tapered manner. Block B may also have multiple regions including portions where the aromatic vinyl monomer is uniformly distributed and/or portions where it is distributed in a tapered manner. Block B may also have multiple segments with different aromatic vinyl monomer contents. When multiple blocks for each of block A and block B are present in a copolymer, their molecular weights and compositions may be the same or different.

The block copolymer may also be a mixture of two or more different types with differences in any one from among the bond form, the molecular weight, the aromatic vinyl compound type, the conjugated diene compound type, the 1,2-vinyl group content or total 1,2-vinyl group content and 3,4-vinyl group content, the aromatic vinyl compound content, and the hydrogenation rate.

The amount of vinyl bonds (for example, butadiene 1,2- or 3,4-bonds) in the conjugated diene bond unit of a conjugated diene-based polymer is preferably 5 mol% or greater, 10 mol% or greater, 13 mol% or greater or 15 mol% or greater, and preferably 80 mol% or lower, 75 mol% or lower, 65 mol% or lower, 50 mol% or lower or 40 mol% or lower.

The amount of vinyl bonds (for example, butadiene 1,2-bonds) among the conjugated diene bond units can be determined by $^{13}$C-NMR (quantitative mode). Specifically, integration of the peak area obtained by $^{13}$C-NMR gives a value proportional to the amount of carbon in each structural unit, which can then be converted to mass% for each structural unit.

Styrene: 145 to 147 ppm
Vinyl: 110 to 116 ppm
Diene (*cis*) 24 to 28 ppm
Diene (*trans*) 29 to 33 ppm

The amount of aromatic vinyl monomer bonded to the conjugated diene monomer in the copolymer of the conjugated diene monomer and the aromatic vinyl monomer (also referred to herein as "aromatic vinyl bond amount") is preferably 5.0 mass% to 70 mass% or 10 mass% to 50 mass%, with respect to the total mass of the conjugated diene-based polymer. The aromatic vinyl bond amount can be calculated from the ultraviolet absorbance of phenyl groups, and this can be used to further calculate the conjugated diene binding amount.

A conjugated diene-based polymer may be partially hydrogenated or fully hydrogenated. From the viewpoint of inhibiting heat degradation during processing, the hydrogenation rate of the hydrogenated product is preferably 50% or higher, 80% or higher or 98% or higher, and from the viewpoint of low-temperature toughness it is preferably 50% or lower, 20% or lower or 0% (i.e. non-hydrogenated). A hydrogenated conjugated diene-based polymer may be a hydrogenated form of any of the conjugated diene-based polymers mentioned above, and for example, it may be a hydrogenated butadiene homopolymer, isoprene homopolymer, styrene-butadiene copolymer or acrylonitrile-butadiene copolymer.

[Non-conjugated diene-based polymer]

The non-conjugated diene-based polymer may be a homopolymer or a copolymer of two or more non-conjugated diene monomers or a copolymer of a non-conjugated diene monomer and another monomer. The copolymer may be either random or block. Non-conjugated diene-based polymers include:

ethylene-propylene rubber, ethylene-propylene-diene rubber, ethylene-butene-diene rubber and olefin-based polymers such as ethylene-$\alpha$-olefin copolymer, and

butyl rubber, brominated butyl rubber, acrylic rubber, fluorine rubber, silicone rubber, chlorinated polyethylene rubber, epichlorohydrin rubber, $\alpha$,$\beta$-unsaturated nitrile-acrylic acid ester-conjugated diene copolymer rubber, urethane rubber and polysulfide rubber.

For ethylene-α-olefin copolymers, monomers that may be copolymerized with the ethylene unit include: aliphatic-substituted vinyl monomers such as propylene, butene-1, pentene-1,4-methylpentene-1, hexene-1, heptene-1, octene-1, nonene-1, decene-1, undecene-1, dodecene-1, tridecene-1, tetradecene-1, pentadecene-1, hexadecene-1, heptadecene-1, octadecene-1, nonadecene-1, eicosene-1 and isobutylene; aromatic vinyl monomers such as styrene and substituted styrene; esteric vinyl monomers such as vinyl acetate, acrylic acid ester, methacrylic acid ester, glycidylacrylic acid ester, glycidylmethacrylic acid ester and hydroxyethylmethacrylic acid ester, nitrogen-containing vinyl monomers such as acrylamide, allylamine, vinyl-*p*-aminobenzene and acrylonitrile, and dienes such as butadiene, cyclopentadiene, 1,4-hexadiene and isoprene.

The copolymer is preferably a copolymer of ethylene and one or more α-olefins of 3 to 20 carbon atoms, more preferably a copolymer of ethylene and one or more α-olefins of 3 to 16 carbon atoms, and most preferably a copolymer of ethylene and one or more α-olefins of 3 to 12 carbon atoms. From the viewpoint of exhibiting impact resistance, the number-average molecular weight of the ethylene-α-olefin copolymer is preferably 10,000 or greater, more preferably 10,000 to 100,000, even more preferably 10,000 to 80,000 and yet more preferably 20,000 to 60,000. From the viewpoint of both flow property and impact resistance, the molecular weight distribution (weight-average molecular weight/number-average molecular weight: Mw/Mn) is preferably 3 or lower, and more preferably 1.8 to 2.7.

From the viewpoint of handleability during processing, the preferred ethylene unit content for the ethylene-α-olefin copolymer is 30 to 95 mass% with respect to the total amount of the ethylene-α-olefin copolymer.

These preferred ethylene-α-olefin copolymers can be produced by the method described in Japanese Examined Patent Publication HEI No. 4-12283, Japanese Unexamined Patent Publication SHO No. 60-35006, Japanese Unexamined Patent Publication SHO No. 60-35007, Japanese Unexamined Patent Publication SHO No. 60-35008, Japanese Unexamined Patent Publication HEI No. 5-155930, Japanese Unexamined Patent Publication HEI No. 3-163088 and US Patent No. 5272236, for example.

The liquid rubber is preferably one or more types selected from the group consisting of styrene-butadiene rubber, natural rubber, butadiene rubber, farnesene rubber and isoprene rubber.

Preferred examples of unmodified liquid rubber as the first rubber include the polymers mentioned above. On the other hand, the modified liquid rubber used as the second rubber may have a structure with at least one type of modifying group introduced into each of the polymers mentioned above. The modifying group may be one or more from among epoxy, acid anhydride, carboxy, aldehyde, hydroxyl, alkoxy, amino, amide, imide, nitro, isocyanato, thio and mercapto groups. The modifying group is preferably one or more selected from the group consisting of maleic anhydride groups and succinic anhydride groups, or it is a maleic anhydride group. Examples of modified liquid rubbers include epoxy-modified natural rubber, epoxy-modified butadiene rubber, epoxy-modified styrene-butadiene rubber, epoxy-modified isoprene rubber, carboxy-modified natural rubber, carboxy-modified butadiene rubber, carboxy-modified styrene-butadiene rubber, carboxy-modified isoprene rubber, acid anhydride-modified natural rubber, acid anhydride-modified butadiene rubber, acid anhydride-modified styrene-butadiene rubber and acid anhydride-modified isoprene rubber.

The modified liquid rubber may have reactive groups (for example, one or more selected from the group consisting of hydroxyl, carboxy, isocyanato, thio, amino and halo groups) at both ends, and it may therefore be bifunctional. The reactive groups contribute to crosslinking and/or chain extension of the modified liquid rubber.

The amount of modifying groups per 100 mol% of the total monomer unit in the modified liquid rubber is preferably 0.1 mol% or greater, 0.2 mol% or greater or 0.3 mol% or greater, from the viewpoint of satisfactory dispersibility and orientation of the cellulose nanofibers, due to satisfactory affinity between the cellulose nanofibers and the modified liquid rubber. If the modifying group content is too high, on the other hand, the modified liquid rubber or the modified liquid rubber and cellulose nanofibers will tend to form a dense structure, thus lowering the dispersibility and orientation of the cellulose nanofibers. In order to impart desired mechanical properties and surface smoothness to the cured rubber product, it is preferred to inhibit formation of such a dense structure. From this viewpoint, the amount of modifying groups is preferably 5 mol% or lower or 3 mol% or lower with respect to 100 mol% of the total monomer units. The amount of modifying groups can be confirmed by infrared absorption spectroscopy, solid state NMR (Nuclear Magnetic Resonance), solution NMR, or a method of combining the previously specified monomer composition, with quantitation by elemental analysis of the elements not present in the unmodified rubber, and calculating the molar ratio of modifying groups.

The modifying group content of the modified liquid rubber is preferably 0.5 mass% or greater, 0.8 mass% or greater or 1.0 mass% or greater, from the viewpoint of satisfactory dispersibility and orientation of the cellulose nanofibers, due to satisfactory affinity between the cellulose nanofibers and the modified liquid rubber, and preferably 20 mass% or lower, 15 mass% or lower or 10 mass% or lower, from the viewpoint of inhibiting formation of the aforementioned dense structure. According to one aspect, the modifying group content can be confirmed by NMR.

The means for producing the modified liquid rubber is not particularly restricted, and for example, the method described in Japanese Unexamined Patent Publication No. 2016-172859 may be used.

According to one aspect, the modifying groups of the modified liquid rubber can form covalent bonds with the cellulose nanofibers and/or rubber during production of the rubber composition, rubber composite or cured rubber product, and especially during heated mixing. Covalent bonding may be advantageous from the viewpoint of further increasing the

reinforcing effect of the cellulose nanofibers. According to one aspect, covalent bonding may be formed between the modified liquid rubber and cellulose nanofibers during production of the rubber composition or rubber composite, and during production of the cured rubber product (i.e. during curing), covalent bonding may be formed between the modified liquid rubber and the third and/or fourth rubber either directly or via another component (a vulcanizing agent, according to one aspect).

From the viewpoint of improving the mechanical properties of the cured rubber product, the first and/or second rubber may be covalently bonded with another rubber (specifically, the third and/or fourth rubber) via a vulcanizing agent during curing of the rubber composition.

According to one aspect, the presence of covalent bonds can be confirmed by the following method. For a rubber composition or rubber composite, the residue obtained by removing the rubber with a solvent (such as hexane or cyclohexane) is analyzed based on nuclear magnetic resonance (NMR) or the infrared absorption spectrum, according to one aspect. According to one aspect, the cured rubber product is analyzed with an electron microscope or atomic force microscope (AFM). According to one aspect, the presence of rubber bonded to the cellulose nanofibers is confirmed by analysis using NMR, infrared absorption spectrum or Nano-IR, as a phase present near the cellulose nanofibers (a region of a substance different from the third and/or fourth rubber in the cured rubber product, according to one aspect).

The first rubber preferably comprises an aromatic vinyl monomer unit from the viewpoint of satisfactory dispersibility and orientation of the cellulose nanofibers resulting from satisfactory affinity with the cellulose nanofibers.

The second rubber is preferably maleic anhydride-modified liquid polyisoprene, from the viewpoint of miscibility with the third rubber and/or fourth rubber and affinity with the cellulose nanofibers.

The amount of the first rubber with respect to 100 parts by mass of the second rubber in the rubber composition is preferably 5 parts by mass or greater, 10 parts by mass or greater or 15 parts by mass or greater, from the viewpoint of satisfactorily obtaining the advantages of the first rubber, and preferably 300 parts by mass or lower, 280 parts by mass or lower or 260 parts by mass or lower, from the viewpoint of not interfering with the advantages of the second rubber.

The amount of the first rubber with respect to 100 parts by mass of the cellulose nanofibers in the rubber composition is preferably 5 parts by mass or greater, 10 parts by mass or greater or 15 parts by mass or greater, from the viewpoint of satisfactorily obtaining the advantages of the first rubber, and preferably 100 parts by mass or lower, 90 parts by mass or lower or 80 parts by mass or lower, from the viewpoint of satisfactorily maintaining the mechanical properties of the molded article.

The amount of the second rubber with respect to 100 parts by mass of the cellulose nanofibers in the rubber composition is preferably 10 parts by mass or greater, 15 parts by mass or greater or 20 parts by mass or greater, from the viewpoint of satisfactorily obtaining the advantages of the second rubber, and preferably 300 parts by mass or lower, 280 parts by mass or lower or 260 parts by mass or lower, from the viewpoint of satisfactorily inhibiting excessive bonding or interaction within the second rubber or between the second rubber and the cellulose nanofibers.

From the viewpoint of satisfactorily obtaining the advantages of the second rubber, the content of the second rubber in the rubber composition is preferably 5 mass% or greater, 7 mass% or greater or 10 mass% or greater, and from the viewpoint of inhibiting excess bonding or interaction within the second rubber or between the second rubber and the cellulose nanofibers, it is preferably 60 mass% or lower, 55 mass% or lower or 50 mass% or lower.

The total content of the first and second rubber in the rubber composition is 10 mass% or greater, 15 mass% or greater or 20 mass% or greater, from the viewpoint of satisfactory dispersibility and orientation of the cellulose nanofibers, and preferably 90 mass% or lower, 85 mass% or lower or 80 mass% or lower, from the viewpoint of obtaining a satisfactory reinforcing effect by the presence of the cellulose nanofibers in the desired amount.

<Dispersing agent>

According to one aspect, the rubber composition comprises a dispersing agent. According to one aspect, the dispersing agent more preferably has a hydrophilic segment and a hydrophobic segment in the same molecule (that is, it is an amphiphilic molecule), from the viewpoint of uniformly dispersing the cellulose nanofibers in the rubber composition.

[Amphiphilic molecule]

In an amphiphilic molecule, the hydrophilic segment is a portion that exhibits satisfactory affinity with the cellulose nanofibers since it includes a hydrophilic structure. Specific hydrophilic structures include groups derived from saccharides such as hydroxyl, thiol, carboxy, sulfonic acid, sulfuric acid ester, phosphoric acid, boronic acid, silanol and sorbitan groups, as well as groups derived from sugars such as sucrose, groups derived from glycerin, groups represented by -OM, -COOM, $-SO_3M$, $-OSO_3M$, $-HMPO_4$ and $-M_2PO_4$ (where M represents an alkali metal or alkaline earth metal), and primary to tertiary amines and quaternary ammonium salts. The counter anion of a quaternary ammonium salt may be one or more hydrophilic groups selected from the group consisting of halide ions such as hydroxide ion, fluoride ion, chloride ion, bromide ion or iodide ion; and nitrate ion, formate ion, acetate ion, trifluoroacetate ion, *p*-toluenesulfonate ion, hexa-

fluorophosphate and tetrafluoroborate.

Examples of hydrophilic segments include polyethylene glycol segments, segments with repeating units containing quaternary ammonium salt structures, polyvinyl alcohol segments, polyvinylpyrrolidone segments, polyacrylic acid segments, carboxyvinyl polymer segments, cationized guar gum segments, hydroxyethyl cellulose segments, methyl cellulose segments, carboxymethyl cellulose segments and polyurethane soft segments (specifically, diol segments). A nonionic polyoxyethylene derivative is particularly preferred, and the polyoxyethylene chain length of the polyoxyethylene derivative may be 3 or greater, 5 or greater, 10 or greater or 15 or greater. A longer chain length will increase affinity with the cellulose nanofibers, but from the viewpoint of balance between the desired properties (for example, mechanical properties) of the molded resin, the polyoxyethylene chain length may be 60 or less, 50 or less, 40 or less, 30 or less or 20 or less.

Examples of hydrophobic segments include segments with hydrocarbons, segments with fluorocarbons, segments with alkylene oxide units of 3 or more carbon atoms (for example, PPG blocks), and segments containing a polymer structure.

Preferred segments with hydrocarbons include alkyl-type, alkenyl-type, alkyl ether-type, alkenyl ether-type, alkylphenyl ether-type, alkenylphenyl ether-type, rosin ester-type, bisphenol A-type, β-naphthyl-type, styrenated phenyl-type and hydrogenated castor oil-type segments. The number of carbon atoms in a hydrophobic group alkyl chain or alkenyl chain (or for alkylphenyl or alkenylphenyl, the number of carbon atoms minus the phenyl group) is preferably 2 or more, 5 or more, 10 or more, 12 or more or 16 or more.

The segment with a fluorocarbon is preferably a straight-chain or branched alkyl-type group of 1 to 20 carbon atoms.

Preferred segments containing polymer structures include acrylic polymers, styrene-based resins, vinyl chloride-based resins, vinylidene chloride-based resins, polyolefin-based resins, amino acid lactams containing lactam ring-opening polymers, polymers composed of diamines and dicarboxylic acids, polyacetal-based resins, polycarbonate-based resins, polyester-based resins, polyphenylene sulfide-based resins, polysulfone-based resins, polyether ketone-based resins, polyimide-based resins, fluorine-based resins, hydrophobic silicone-based resins, melamine-based resins, epoxy-based resins and phenol-based resins.

These hydrophobic segments may have straight-chain structures or branched structures. The hydrophobic segment may have a single-chain structure or a structure with two or more chains, and in the case of a structure with two or more chains, it may have multiple different types of hydrophobic groups.

The structure of the amphiphilic molecule is not particularly restricted, and if the hydrophilic segment is represented as A and the hydrophobic segment as B, then it may be a linear copolymer such as an AB block copolymer, ABA block copolymer or BAB block copolymer, or a 3-branch copolymer comprising A and B, a 4-branch copolymer comprising A and B, a star copolymer comprising A and B, a monocyclic copolymer comprising A and B, a polycyclic copolymer comprising A and B, a cage-type copolymer comprising A and B, or a graft copolymer comprising A and B.

When multiple hydrophilic segment molecules are present in the molecule, the molecular structure may be of a single type or a combination of two or more types. Likewise, when multiple hydrophobic segment molecules are present in the molecule, the molecular structure may be of a single type or a combination of two or more types.

(Surfactants)

An amphiphilic molecule used may be any anionic surfactant, nonionic surfactant, cationic surfactant or amphoteric surfactant. The dispersing agent may be a polymeric surfactant or a reactive surfactant.

Examples of nonionic surfactants include fatty acid dialkanolamides (for example, lauric acid diethanolamide), polyoxyalkylene fatty acid amides (for example, polyoxyethylene stearic acid amide), polyoxyalkylene aryl ethers (for example, polyoxyethylene phenyl ether), polyoxyalkylene alkylaryl ethers (for example, polyoxyethylene octylphenyl ether), polyoxyalkylene alkyl or alkenyl ethers (for example, polyoxyethylene lauryl ether and polyoxyethylene stearyl ether), polyhydric alcohol fatty acid esters (for example, polyethylene glycol mono or distearic acid esters, polyethylene glycol mono or dilauric acid esters and polyoxyethylene hydrogenated castor oil), glycerin fatty acid esters (for example, glycerin monostearate and glycerin monooleate), sorbitan fatty acid esters (for example, sorbitan monolaurylate and sorbitan monostearate), and polyoxyethylene-polyoxypropylene block copolymers.

An anionic surfactant (emulsifier) may be a carboxylic acid salt, sulfonic acid salt, sulfuric acid ester or phosphoric acid ester, examples of which include carboxylic acid salts such as aliphatic monocarboxylic acid and alkyl ether carboxylic acid salts, sulfonic acid salts such as dialkylsulfosuccinates, alkanesulfonates, alkylbenzenesulfonates and alkylnaphthalenesulfonates, sulfuric acid esters such as alkyl sulfates and fatty acid sulfates, and phosphoric acid esters such as alkyl phosphates and polyoxyethylene alkyl ether phosphates.

Cationic surfactants include amine salts, amidoamine salts, quaternary ammonium salts and imidazolinium salts. Specific examples include, but are not limited to, amine salt-type surfactants such as alkylamine salts, polyoxyethylenealkylamine salts, alkyl amidoamine salts, amino alcohol fatty acid derivatives, polyamine fatty acid derivatives

and imidazoline, and quaternary ammonium salt-type surfactants such as alkyltrimethylammonium salts, dialkyldimethylammonium salts, alkyldimethylbenzylammonium salts, alkylpyridinium salts, alkylisoquinolinium salts and benzethonium chloride.

Examples of amphoteric surfactants include alkylamine oxides, alanines, imidazoliniumbetaines, amidobetaines and betaine acetate, and specifically long-chain amineoxide, lauryl betaine, stearyl betaine, laurylcarboxymethylhydroxyethyl imidazolinium betaine, betaine lauryldimethylaminoacetate and fatty acid betaine amidopropyldimethylaminoacetate.

[Hydrophilic polymer]

According to one aspect, the dispersing agent is preferably a hydrophilic polymer. According to another aspect, the hydrophilic polymer is a polymer having a hydrophilic group selected from the group consisting of hydroxyl, carboxy, amino, ammonium, sulfonic acid and phosphoric acid groups. The hydrophilic polymer used may be one or more selected from the group consisting of cellulose derivatives (such as hydroxyethyl cellulose, methyl cellulose and carboxymethyl cellulose), polyalkylene glycols, polyvinyl alcohol, polyvinylpyrrolidone, polyacrylic acid, carboxyvinyl polymers, cationized guar gum, water-soluble polyurethane, polymers including quaternary ammonium salt structures, amides and amines. Cellulose derivatives and polyalkylene glycols are more preferred, with polyalkylene glycols being especially preferred.

The amount of dispersing agent in the rubber composition is preferably 1 part by mass or greater, 3 parts by mass or greater, 5 parts by mass or greater, 10 parts by mass or greater or 15 parts by mass or greater, and preferably 200 parts by mass or lower, 150 parts by mass or lower, 100 parts by mass or lower, 90 parts by mass or lower, 80 parts by mass or lower, 70 parts by mass or lower, 60 parts by mass or lower or 50 parts by mass or lower, with respect to 100 parts by mass of the cellulose nanofibers.

The dispersing agent content in the rubber composition component may be 0.1 mass% or greater, 0.5 mass% or greater or 1 mass% or greater, according to one aspect, and 40 mass% or lower, 35 mass% or lower or 30 mass% or lower, according to another aspect.

<Third rubber>

According to one aspect, the rubber composition further comprises a third rubber. The third rubber may be one or more types selected from the group consisting of natural rubber, conjugated diene-based polymers and non-conjugated diene-based polymers, or hydrogenated products of the same. The polymer or its hydrogenated product may also be modified rubber, or an oligomer. The third rubber may be a thermoplastic elastomer, for example. According to one aspect, the third rubber is rubber that is not the first or second rubber of this embodiment, and more specifically rubber that is not fluid at 23°C (i.e. solid). The first and/or second rubber and third rubber may be different (of different types) in one or more aspects from among the constituent monomer component type, constituent monomer component ratio and molecular weight.

[Natural rubber]

From the viewpoint of obtaining a large number of high-molecular-weight components and excellent breaking strength, examples of natural rubber include, but are not limited to, smoke-dried RSS (Ribbed Smoked Sheet) #3 to #5; and as mechanical dried TSR (Technically Specified Rubber): SIR (Standard Indonesian Rubber) (Indonesia), STR (Standard Thai Rubber) (Thailand), SMR (Standard Malaysian Rubber) (Malaysia) and epoxidized natural rubber.

[Conjugated diene-based polymer]

The conjugated diene-based polymer may be a homopolymer or a copolymer of two or more conjugated diene monomers, or a copolymer of a conjugated diene monomer and another monomer. The copolymer may be either random or block.

Conjugated diene monomers include 1,3-butadiene, isoprene, 2,3-dimethyl-1,3-butadiene, 1,3-pentadiene, 3-methyl-1,3-pentadiene, 1,3-heptadiene and 1,3-hexadiene, and any one of these or a combination of two or more may be used.

According to one aspect, the conjugated diene-based polymer is a copolymer of a conjugated diene monomer and an aromatic vinyl monomer.

Aromatic vinyl monomers are not particularly restricted so long as they are monomers that are copolymerizable with conjugated diene monomers, and examples include styrene, *m*- or *p*-methylstyrene, $\alpha$-methylstyrene, ethylstyrene, *p-tert*-butylstyrene, vinylethylbenzene, vinylxylene, vinylnaphthalene, diphenylethylene and divinylbenzene, among

which any one or combination of two or more may be used. Styrene is preferred from the viewpoint of molding workability of the rubber composite and impact resistance of the molded article.

Random copolymers include butadiene-isoprene random copolymer, butadiene-styrene random copolymer, isoprene-styrene random copolymer and butadiene-isoprene-styrene random copolymer. The compositional distribution of each monomer in the copolymer chain may be that of a completely random copolymer having a nearly statistically random composition, or of a tapered (gradient) random copolymer having a gradient in the compositional distribution. A composition with a conjugated diene-based polymer bond form, i.e. 1,4-bonds or 1,2-bonds, may have uniform or different molecules.

A block copolymer may be a copolymer composed of two or more blocks. An example is a block copolymer in which block A as an aromatic vinyl monomer and block B as a conjugated diene monomer block and/or an aromatic vinyl monomer and conjugated diene monomer copolymer block, form the structure A-B, A-B-A or A-B-A-B. There is no essential need for distinct block borders, and for example, when block B is a copolymer of an aromatic vinyl monomer and a conjugated diene monomer, the aromatic vinyl monomer in block B may be distributed in a uniform or tapered manner. Block B may also have multiple regions including portions where the aromatic vinyl monomer is uniformly distributed and/or portions where it is distributed in a tapered manner. Block B may also have multiple segments with different aromatic vinyl monomer contents. When multiple blocks for each of block A and block B are present in a copolymer, their molecular weights and compositions may be the same or different.

The block copolymer may also be a mixture of two or more different types with differences in any one from among the bond form, the molecular weight, the aromatic vinyl compound type, the conjugated diene compound type, the 1,2-vinyl group content or total 1,2-vinyl group content and 3,4-vinyl group content, the aromatic vinyl compound content, and the hydrogenation rate.

The amount of vinyl bonds (for example, butadiene 1,2- or 3,4-bonds) in the conjugated diene bond unit of a conjugated diene-based polymer is preferably 5 mol% or greater, 10 mol% or greater, 13 mol% or greater or 15 mol% or greater, and preferably 80 mol% or lower, 75 mol% or lower, 65 mol% or lower, 50 mol% or lower or 40 mol% or lower.

The amount of vinyl bonds (for example, butadiene 1,2-bonds) among the conjugated diene bond units can be determined by $^{13}$C-NMR (quantitative mode). Specifically, integration of the peak area obtained by $^{13}$C-NMR gives a value proportional to the amount of carbon in each structural unit, which can then be converted to mass% for each structural unit.

Styrene: 145 to 147 ppm
Vinyl: 110 to 116 ppm
Diene (*cis*) 24 to 28 ppm
Diene (*trans*) 29 to 33 ppm

The amount of aromatic vinyl monomer bonded to the conjugated diene monomer in the copolymer of the conjugated diene monomer and the aromatic vinyl monomer (also referred to herein as "aromatic vinyl bond amount") is preferably 5.0 mass% to 70 mass% or 10 mass% to 50 mass%, with respect to the total mass of the conjugated diene-based polymer. The aromatic vinyl bond amount can be calculated from the ultraviolet absorbance of phenyl groups, and this can be used to further calculate the conjugated diene binding amount.

A conjugated diene-based polymer may be partially hydrogenated or fully hydrogenated. From the viewpoint of inhibiting heat degradation during processing, the hydrogenation rate of the hydrogenated product is preferably 50% or higher, 80% or higher or 98% or higher, and from the viewpoint of low-temperature toughness it is preferably 50% or lower, 20% or lower or 0% (i.e. non-hydrogenated). A hydrogenated conjugated diene-based polymer may be a hydrogenated form of any of the conjugated diene-based polymers mentioned above, and for example, it may be a hydrogenated butadiene homopolymer, isoprene homopolymer, styrene-butadiene copolymer or acrylonitrile-butadiene copolymer.

[Non-conjugated diene-based polymer]

The non-conjugated diene-based polymer may be a homopolymer or a copolymer of two or more non-conjugated diene monomers or a copolymer of a non-conjugated diene monomer and another monomer. The copolymer may be either random or block. Non-conjugated diene-based polymers include olefin-based polymers such as ethylene-propylene rubber, ethylene-propylene-diene rubber, ethylene-butene-diene rubber and ethylene-α-olefin copolymers, as well as butyl rubber, brominated butyl rubber, acrylic rubber, fluorine rubber, silicone rubber, chlorinated polyethylene rubber, epichlorohydrin rubber, α,β-unsaturated nitrile-acrylic acid ester-conjugated diene copolymer rubber, urethane rubber and polysulfide rubber.

For ethylene-α-olefin copolymers, monomers that may be copolymerized with the ethylene unit include: aliphatic-substituted vinyl monomers such as propylene, butene-1, pentene-1,4-methylpentene-1, hexene-1, heptene-1, octene-1, nonene-1, decene-1, undecene-1, dodecene-1, tridecene-1, tetradecene-1, pentadecene-1, hexadecene-1, heptadecene-1, octadecene-1, nonadecene-1, eicosene-1 and isobutylene; aromatic vinyl monomers such as styrene

and substituted styrene; esteric vinyl monomers such as vinyl acetate, acrylic acid ester, methacrylic acid ester, glycidylacrylic acid ester, glycidylmethacrylic acid ester and hydroxyethylmethacrylic acid ester, nitrogen-containing vinyl monomers such as acrylamide, allylamine, vinyl-*p*-aminobenzene, acrylonitrile, and dienes such as butadiene, cyclopentadiene, 1,4-hexadiene and isoprene.

The copolymer is preferably a copolymer of ethylene and one or more $\alpha$-olefins of 3 to 20 carbon atoms, more preferably a copolymer of ethylene and one or more $\alpha$-olefins of 3 to 16 carbon atoms, and most preferably a copolymer of ethylene and one or more $\alpha$-olefins of 3 to 12 carbon atoms. From the viewpoint of exhibiting impact resistance, the number-average molecular weight of the ethylene-$\alpha$-olefin copolymer is preferably 10,000 or greater, more preferably 10,000 to 100,000, even more preferably 10,000 to 80,000 and yet more preferably 20,000 to 60,000. From the viewpoint of both flow property and impact resistance, the molecular weight distribution (weight-average molecular weight/number-average molecular weight: Mw/Mn) is preferably 3 or lower, and more preferably 1.8 to 2.7.

From the viewpoint of handleability during processing, the preferred ethylene unit content for the ethylene-$\alpha$-olefin copolymer is 30 to 95 mass% with respect to the total amount of the ethylene-$\alpha$-olefin copolymer.

These preferred ethylene-$\alpha$-olefin copolymers can be produced by the method described in Japanese Examined Patent Publication HEI No. 4-12283, Japanese Unexamined Patent Publication SHO No. 60-35006, Japanese Unexamined Patent Publication SHO No. 60-35007, Japanese Unexamined Patent Publication SHO No. 60-35008, Japanese Unexamined Patent Publication HEI No. 5-155930, Japanese Unexamined Patent Publication HEI No. 3-163088 and US Patent No. 5272236, for example.

[Modified rubber]

The third rubber may be modified rubber, and for example, modifying groups such as epoxy, acid anhydride, carboxy, aldehyde, hydroxyl, alkoxy, amino, amide, imide, nitro, isocyanate or mercapto groups may be introduced into any conjugated diene-based polymer or non-conjugated diene-based polymer mentioned above. Examples of modified rubber include epoxy-modified natural rubber, epoxy-modified butadiene rubber, epoxy-modified styrene-butadiene rubber, carboxy-modified natural rubber, carboxy-modified butadiene rubber, carboxy-modified styrene-butadiene rubber, acid anhydride-modified natural rubber, acid anhydride-modified butadiene rubber and acid anhydride-modified styrene-butadiene rubber.

The amount of modifying groups per 100 mol% of the total monomer unit is preferably 0.1 mol% or greater, 0.2 mol% or greater or 0.3 mol% or greater and preferably 5 mol% or lower or 3 mol% or lower, from the viewpoint of affinity with the cellulose nanofibers. The amount of modifying groups can be confirmed by infrared absorption spectroscopy, solid state NMR (Nuclear Magnetic Resonance), solution NMR, or a method of combining the previously specified monomer composition with quantitation by elemental analysis of the elements not present in the unmodified rubber, and calculating the molar ratio of modifying groups.

[Thermoplastic elastomer]

According to one aspect, the third rubber may include a thermoplastic elastomer or it may be a thermoplastic elastomer. Throughout the disclosure, according to one aspect, "elastomer" means a substance (specifically, a natural or synthetic polymer substance) that is an elastic solid at room temperature (23°C). According to one aspect, "elastic solid" means that the storage modulus at 23°C, 10 Hz, measured based on dynamic viscoelasticity, is 1 MPa to 100 MPa. The thermoplastic elastomer may be a conjugated diene-based polymer or a non-conjugated diene-based polymer, and according to one aspect it is a crosslinked product. The preferred monomer composition of the thermoplastic elastomer may be the same as mentioned above under (Conjugated diene-based polymer) and (Non-conjugated diene-based polymer).

The number-average molecular weight (Mn) of the thermoplastic elastomer is preferably 10,000 to 500,000 or 40,000 to 250,000, from the viewpoint of both impact strength and flow property.

The thermoplastic elastomer may also have a core-shell structure. Elastomers having a core-shell structure include core-shell type elastomers having a core of particulate rubber and a shell of a glassy graft layer formed around the exterior of the core. The core is preferably butadiene-based rubber, acrylic rubber or silicone-acrylic composite rubber. A vitreous polymer such as styrene resin, acrylonitrile-styrene copolymer or acrylic resin is suitable for the shell.

From the viewpoint of obtaining excellent compatibility with the first and/or second rubber, the thermoplastic elastomer is preferably at least one type selected from the group consisting of styrene-butadiene block copolymer, styrene-ethylene-butadiene block copolymer, styrene-ethylene-butylene block copolymer, styrene-butadiene-butylene block copolymer, styrene-isoprene block copolymer, styrene-ethylene-propylene block copolymer, styrene-isobutylene block copolymer, hydrogenated styrene-butadiene block copolymer, hydrogenated styrene-ethylene-butadiene block copolymer, hydrogenated styrene-butadiene-butylene block copolymer, hydrogenated styrene-isoprene block copolymer and styrene homopolymer (polystyrene), and more preferably it is at least one type selected from the group consisting of

styrene-butadiene block copolymer, hydrogenated styrene-butadiene block copolymer and polystyrene.

According to one aspect, at least a portion of the thermoplastic elastomer may have an acidic functional group. That the thermoplastic elastomer has an acidic functional group, for the purpose of the disclosure, means that an acidic functional group has been added via chemical bonding into the molecular skeleton of the elastomer. An "acidic functional group", for the purpose of the disclosure, means a functional group that can react with a basic functional group, and specific examples include hydroxyl, carboxyl, carboxylate, sulfo, and acid anhydride groups.

From the viewpoint of affinity with the modified liquid rubber, the amount of the acidic functional group added to the elastomer is preferably 0.01 mass% or greater, more preferably 0.1 mass% or greater and even more preferably 0.2 mass% or greater, and preferably 5 mass% or lower, more preferably 3 mass% or lower, even more preferably 2 mass% or lower and yet more preferably lower than 1.5 mass%, based on 100 mass% of the elastomer. The number of acidic functional groups is the value obtained by measuring the sample against a calibration curve drawn using the characteristic absorption band for the acid, after measuring a calibration sample premixed with the acidic substance using an infrared absorption spectrometer.

Elastomers with acidic functional groups include elastomers having a core-shell structure wherein the shell is a layer formed using a copolymerizing component such as acrylic acid, and elastomers which are modified by grafting $\alpha,\beta$-unsaturated dicarboxylic acids or their derivatives onto ethylene-$\alpha$-olefin copolymers, polyolefins, aromatic compound-conjugated diene copolymers or hydrogenated aromatic compound-conjugated diene copolymers that include acrylic acid as a monomer, either in the presence or in the absence of a peroxide.

According to a preferred aspect, the elastomer is an acid anhydride-modified elastomer.

More preferred among these are modified forms with $\alpha,\beta$-unsaturated dicarboxylic acids or their derivatives grafted onto polyolefins, aromatic compound-conjugated diene copolymers or hydrogenated aromatic compound-conjugated diene copolymers, either in the presence or in the absence of a peroxide, and particularly preferred are modified forms with $\alpha,\beta$-unsaturated dicarboxylic acids or their derivatives grafted onto ethylene-$\alpha$-olefin copolymers or hydrogenated aromatic compound-conjugated diene block copolymers, either in the presence or in the absence of a peroxide.

Specific examples of $\alpha,\beta$-unsaturated dicarboxylic acids and their derivatives include maleic acid, fumaric acid, maleic anhydride and fumaric anhydride, with maleic anhydride being particularly preferred.

According to one aspect, the elastomer may be a mixture of an elastomer with an acidic functional group and an elastomer without an acidic functional group. The mixing ratio of the elastomer with an acidic functional group and the elastomer without an acidic functional group is preferably 10 mass% or greater, more preferably 20 mass% or greater, even more preferably 30 mass% or greater and most preferably 40 mass% or greater, where 100 mass% is the total of both, from the viewpoint of satisfactorily maintaining high toughness and stable physical properties for the cured rubber product by the elastomer with an acidic functional group. There is no particular upper limit, and essentially all of the elastomer may be an elastomer with an acidic functional group, but from the viewpoint of avoiding flow property issues it is preferably 80 mass% or lower.

From the viewpoint of producing a cured rubber product with excellent mechanical strength, the third rubber is preferably one or more selected from the group consisting of styrene-butadiene rubber, natural rubber and isoprene rubber, and more preferably natural rubber.

According to one aspect, the mass ratio of the total amount of the cellulose nanofibers and the first and second rubbers in the rubber composition component with respect to the third rubber [(total of cellulose nanofibers and first and second rubbers)/third rubber] may be 1/99 to 99/1, 5/95 to 95/5, 10/90 to 90/10, 20/80 to 80/20 or 30/70 to 70/30.

For example, when the preliminary composition comprising the cellulose nanofibers and the first and second rubber is to be supplied for production of a rubber composition, the mass ratio of the preliminary composition and the third rubber (preliminary composition/third rubber) in the rubber composition component may be 1/99 to 99/1, 5/95 to 95/5, 10/90 to 90/10, 20/80 to 80/20 or 30/70 to 70/30, according to one aspect.

The content of the third rubber in the rubber composition component is preferably 10 mass% or greater or 20 mass% or greater, and preferably 90 mass% or lower, 85 mass% or lower or 80 mass% or lower.

The total content of the first, second and third rubber in the rubber composition component is preferably 40 mass% or greater, 45 mass% or greater or 50 mass% or greater, and preferably 99 mass% or lower, 95 mass% or lower or 90 mass% or lower.

The total content of the first and second rubbers with respect to 100 parts by mass as the total of the first, second and third rubber in the rubber composition component is preferably 5 parts by mass or greater, 10 parts by mass or greater or 15 parts by mass or greater, and preferably 70 parts by mass or lower, 65 parts by mass or lower or 60 parts by mass or lower.

The amount of cellulose nanofibers in the rubber composition component with respect to 100 parts by mass as the total of the first, second and third rubbers is preferably 1 part by mass or greater, 2 parts by mass or greater or 3 parts by mass or greater, and preferably 70 parts by mass or lower, 65 parts by mass or lower or 60 parts by mass or lower.

The mass ratio of [cellulose nanofibers]/[total of first, second and third rubbers] in the rubber composition component is preferably 1/99 to 60/40, 2/98 to 50/50 or 3/97 to 40/60.

[Vulcanizing agent and vulcanization accelerator]

When the rubber composition components include uncured rubber, the rubber composition components will typically include a vulcanizing agent, and optionally also a vulcanization accelerator. The vulcanizing agent and vulcanization accelerator may be appropriately selected from among conventional publicly known compounds, depending on the type of uncured rubber among the rubber composition components. The vulcanizing agent used may be an organic peroxide, an azo compound, an oxime compound, a nitroso compound, a polyamine compound, sulfur or a sulfur compound. Sulfur compounds include sulfur monochloride, sulfur dichloride, disulfide compounds and polymer polysulfur compounds.

The amount of vulcanizing agent among the rubber composition components is preferably 0.01 parts by mass to 20 parts by mass or 0.1 part by mass to 15 parts by mass with respect to 100 parts by mass of the uncured rubber among the rubber composition components.

The vulcanization accelerator may be a sulfenamide-based, guanidine-based, thiuram-based, aldehyde-amine-based, aldehyde-ammonia-based, thiazole-based, thiourea-based or dithiocarbamate-based vulcanization accelerator. Zinc oxide or stearic acid may also be used as vulcanizing aids. The amount of vulcanization accelerator is preferably 0.01 parts by mass to 20 parts by mass or 0.1 part by mass to 15 parts by mass with respect to 100 parts by mass of the uncured rubber among the rubber composition components.

[Rubber additives]

The rubber composition components may also include conventional publicly known rubber additives (such as stabilizers, softening agents and aging inhibitors). Rubber stabilizers may be one or more antioxidants such as 2,6-di-*tert*-butyl-4-hydroxytoluene (BHT), *n*-octadecyl-3-(4'-hydroxy-3',5'-di-*tert*-butylphenyl)propionate and 2-methyl-4,6-bis[(octylthio)methyl]phenol. Rubber softening agents may be one or more process oils or extender oils. However, since the rubber composition of the embodiment is able to form a flexible molded article according to one aspect, the rubber composition components preferably do not include a rubber softening agent, according to that aspect.

The vulcanizing agent, vulcanization accelerator and rubber additive will typically be added during production of the rubber composite, but there is no limitation to this mode of addition.

<Additional rubber composition components>

The rubber composition components may further include additional components. Additional components include additional polymers, organic or inorganic fillers, heat stabilizers, antioxidants, antistatic agents and coloring agents. The content ratios of optional additional rubber composition components are appropriately selected in a range that does not interfere with the desired effect of the invention, and for example, they may be 0.01 to 50 mass% or 0.1 to 30 mass%.

<Production of rubber composition>

The rubber composition can be produced by a method of mixing rubber composition components that include cellulose nanofibers, the first rubber and the second rubber. The method for producing the rubber composition may be:

(1) a method comprising:

a first step in which cellulose nanofibers are mixed with a first rubber as unmodified liquid rubber to obtain a preliminary composition, and
a second step in which the preliminary composition is mixed with a second rubber as modified liquid rubber to obtain a rubber composition, or

(2) a method comprising:

a first step in which a first rubber as unmodified liquid rubber is mixed with a second rubber as modified liquid rubber to obtain a preliminary composition, and
a second step in which the preliminary composition is mixed with cellulose nanofibers to obtain a rubber composition.

The mixing conditions are not particularly restricted, and for example, the components composing the rubber composition may be mixed by stirring means such as a rotating/revolving mixer, planetary mixer, propeller-type stirrer, rotary stirrer, electromagnetic stirrer, open roll, Banbury mixer, kneader, single-screw extruder or twin-screw extruder, to

obtain a rubber composition. The stirring may be carried out with heating for efficient shearing.

Combining the first rubber with the cellulose nanofibers beforehand in method (1) above results in more suitable and consistent opportunity for contact between the cellulose nanofibers and the second rubber, thereby more satisfactorily improving the physical properties of the rubber composition, rubber composite or cured rubber product.

The obtained rubber composition may also be dried, while controlling the drying conditions, to form a powder. In method (1), the preliminary composition may be dried after obtaining the preliminary composition and before mixing with the modified liquid rubber.

Yet another aspect provides a dried body consisting of the rubber composition of the disclosure (a powder, according to one aspect). Yet another aspect provides a dried body comprising the rubber composition of the disclosure (a powder, according to one aspect).

When the rubber composition comprises a third rubber, the third rubber may be further mixed in the second step of method (1) or (2), according to one aspect. The mixing conditions are not particularly restricted, and for example, a kneader used for common rubber kneading, such as a Banbury mixer, kneader or open roll, may be used. The rotor of the kneader may be a meshing rotor or tangential rotor, and a rotor designed for resin kneading may also be used. Meshing rotors include KIR-II by Kobe Steel, Ltd., and Model EX7 by Mitsubishi Heavy Industries, Ltd. Tangential rotors include 5THR, 4WN and 4WH by Kobe Steel, Ltd., and Model E by Mitsubishi Heavy Industries, Ltd. The resin kneading rotors include the roller-type R500B by Toyo Seiki Seisakusho, Ltd.

Alternatively, after first preparing the rubber composition by the method of (1) or (2) above, the rubber composition and a third rubber may be mixed to obtain a rubber composition further comprising the third rubber. The mixing conditions may be the same as described above for a rubber composition comprising a third rubber.

Dispersion of the cellulose nanofibers can be promoted particularly by kneading the third rubber with a rubber kneading machine in the second step of method (1). Since the viscosity of the kneaded blend can be increased by the presence of the third rubber in the second step, this increases the shearing force acting on the kneaded blend. With a rubber kneading machine, distribution proceeds satisfactorily even when high-viscosity rubber is used. Since the second rubber and cellulose nanofibers therefore come into sufficient contact at a suitable rate, this can help accelerate dispersion of the cellulose nanofibers.

All of the rubber compositions mentioned above can be suitably used as master batches, for example, and may be applied for production of a variety of rubber composites.

According to one aspect, the method of mixing the cellulose nanofibers with the first rubber and/or second rubber may comprise adding the cellulose nanofibers in the form of dried cellulose nanofibers. According to another aspect, the cellulose nanofibers may be mixed with the first rubber and/or second rubber in the form of a slurry, and the liquid medium in the slurry then dried off to obtain a preliminary composition or rubber composition comprising the cellulose nanofibers.

<Drying step>

According to one aspect, a dried body comprising cellulose nanofibers (or dried cellulose nanofibers, or a preliminary composition or rubber composition that comprises cellulose nanofibers) can be produced by drying a cellulose nanofiber slurry. According to one aspect, the dried body comprising cellulose nanofibers is a powder.

The dryer is not particularly restricted, and it may be a kneader, planetary mixer, Henschel mixer, high-speed mixer, propeller mixer, ribbon mixer, single-screw or twin-screw extruder, Banbury mixer, freeze dryer, shelf dryer, spray atomization dryer, fluidized bed dryer or drum dryer.

The drying temperature may be 20°C or higher, 30°C or higher, 40°C or higher or 50°C or higher, for example, from the viewpoint of drying efficiency, nanodispersibility of the cellulose nanofibers in the rubber composition, and forming a dried body comprising cellulose nanofibers with excellent macro dispersibility and powder properties, and it may also be 200°C or lower, 180°C or lower, 160°C or lower, 140°C or lower, 120°C or lower or 100°C or lower, for example, from the viewpoint of helping to prevent heat degradation of the cellulose nanofibers and additional components, and from the viewpoint of avoiding excessive micronization of the dried body comprising the cellulose nanofibers by rapid drying of the slurry.

The drying temperature is the temperature of the heat source that is contacted with the slurry, and it is defined as the surface temperature of the temperature control jacket of the drying apparatus, the surface temperature of the heating cylinder, or the temperature of the hot air, for example.

The pressure may be atmospheric pressure or reduced pressure, but from the viewpoint of forming a dried body comprising cellulose nanofibers with powder properties for excellent drying efficiency, nanodispersibility of the cellulose nanofibers in the rubber composition and excellent macrodispersibility, it may be -1 kPa or lower, -10 kPa or lower, -20 kPa or lower, -30 kPa or lower, -40 kPa or lower or -50 kPa or lower, and from the viewpoint of avoiding excessive micronization of the dried body comprising the cellulose nanofibers by rapid drying of the slurry, it may be -100 kPa or higher, -95 kPa or higher or -90 kPa or higher.

From the viewpoint of process efficiency during drying, the concentration of the cellulose nanofibers in the

cellulose nanofiber slurry supplied to the drying step is preferably 1 mass% or greater, 2 mass% or greater, 3 mass% or greater, 5 mass% or greater, 10 mass% or greater, 15 mass% or greater, 20 mass% or greater or 25 mass% or greater, and from the viewpoint of avoiding excessive increase in the slurry viscosity and its solidification by aggregation in order to maintain satisfactory handleability, it is preferably 50 mass% or lower, 45 mass% or lower, 40 mass% or lower or 35 mass% or lower. For example, while production of cellulose nanofibers is generally carried out in a dilute dispersion, the dilute dispersion can be concentrated to adjust the cellulose nanofiber concentration in the slurry to the aforementioned preferred range. A method such as suction filtration, pressure filtration, centrifugal dehydration or heating may be used for the concentration.

According to one aspect, the dried body comprising the cellulose nanofibers may comprise the first rubber and/or second rubber, as well as optional additional components (such as the dispersing agent mentioned above), and it may be added before, during and/or after drying of the cellulose nanofiber slurry. According to one aspect, the first rubber and/or second rubber, and/or optional additional components, may be added in a state dispersed or dissolved in water and/or an organic solvent. There are no particular restrictions on the organic solvent, but it is preferably a solvent in which the first rubber and second rubber dissolve, and it may be a non-aqueous solvent such as chloroform, toluene, hexane or cyclohexane.

[Liquid medium content]

The liquid medium content of the dried body comprising the cellulose nanofibers is preferably 50 mass% or lower, 40 mass% or lower, 30 mass% or lower, 20 mass% or lower or 10 mass% or lower, from the viewpoint of manageability during kneading with the third rubber. The liquid medium content may be 0 mass%, but from the viewpoint of facilitating production of the dried body comprising cellulose nanofibers, it may be 0.1 mass% or greater, 1 mass% or greater or 1.5 mass% or greater, for example. The liquid medium content is the value measured using an infrared heating moisture meter.

[Mean particle size]

According to one aspect, the mean particle size of the dried body comprising the cellulose nanofibers is preferably 1 μm or larger, 10 μm or larger, 50 μm or larger, 100 μm or larger, 200 μm or larger or 500 μm or larger from the viewpoint of easier production, and preferably 10,000 μm or smaller, 5000 μm or smaller, 4000 μm or smaller, 3000 μm or smaller or 2000 μm or smaller, from the viewpoint of facilitating disintegration of the dried body comprising the cellulose nanofibers in the rubber composition and allowing the cellulose nanofibers to satisfactorily disperse in the rubber composition. The mean particle size is the value measured with a dynamic image analysis particle size distribution analyzer (CAMSIZER X2 by Microtrac).

[Loose bulk density]

According to one aspect, the loose bulk density of the dried body comprising the cellulose nanofibers is preferably 0.01 g/cm$^3$ or greater, 0.05 g/cm$^3$ or greater, 0.10 g/cm$^3$ or greater, 0.15 g/cm$^3$ or greater, 0.20 g/cm$^3$ or greater, 0.25 g/cm$^3$ or greater, 0.30 g/cm$^3$ or greater, 0.35 g/cm$^3$ or greater, 0.40 g/cm$^3$ or greater, 0.45 g/cm$^3$ or greater or 0.50 g/cm$^3$ or greater, from the viewpoint of a satisfactory flow property and excellent feedability of the dried body comprising the cellulose nanofibers, and also from the viewpoint of inhibiting migration of the dispersing agent into the rubber composition, while it is preferably 0.85 g/cm$^3$ or lower, 0.80 g/cm$^3$ or lower or 0.75 g/cm$^3$ or lower, from the viewpoint of easy disintegration of the dried body comprising the cellulose nanofibers in the rubber composition so that the cellulose nanofibers can satisfactorily disperse in the rubber composition, and also from the viewpoint of avoiding excessive heaviness of the dried body comprising the cellulose nanofibers and reducing defects for the mixture of the dried body comprising the cellulose nanofibers and rubber composition.

[Packed bulk density]

According to another aspect, the packed bulk density of the dried body comprising the cellulose nanofibers is controlled within a range that is useful for keeping the loose bulk density and degree of compaction within the ranges specified by the present disclosure, and according to another aspect it is preferably 0.01 g/cm$^3$ or greater, 0.1 g/cm$^3$ or greater, 0.15 g/cm$^3$ or greater, 0.2 g/cm$^3$ or greater, 0.3 g/cm$^3$ or greater, 0.4 g/cm$^3$ or greater, 0.5 g/cm$^3$ or greater or 0.6 g/cm$^3$ or greater, and preferably 0.95 g/cm$^3$ or lower, 0.9 g/cm$^3$ or lower or 0.85 g/cm$^3$ or lower.

[Degree of compaction]

The degree of compaction is the value calculated by the formula: Degree of compaction = (packed bulk density -

loose bulk density) / packed bulk density. The loose bulk density and packed bulk density are the values measured by the methods described herein under "Examples".

According to one aspect, the degree of compaction represents the extent of volume reduction. According to one aspect, the degree of compaction of the dried body comprising the cellulose nanofibers is preferably 1% or greater, 5% or greater, 10% or greater, 15% or greater, 20% or greater or 25% or greater, from the viewpoint of avoiding an excessively high flow property of the dried body comprising the cellulose nanofibers. The degree of compaction is also preferably 50% or lower, 45% or lower, 40% or lower, 35% or lower or 30% or lower, from the viewpoint of satisfactory flow properties and excellent feedability of the dried body comprising the cellulose nanofibers, and of excellent handleability (specifically, resistance to scattering, suspension or dust formation), from the viewpoint of satisfactorily dispersing the dried body comprising the cellulose nanofibers in the rubber composition, and from the viewpoint of inhibiting migration of the dispersing agent into the rubber.

The loose bulk density, the packed bulk density and the degree of compaction are measured using a powder tester (Model PT-X) by Hosokawa Micron Group. The number of times tapped in the packed bulk density measurement is 180.

A more specific example for the order of steps is the following.

(i) Preparation of slurry containing cellulose nanofibers and optional dispersing agent → drying to prepare dried body → preparation of preliminary composition comprising dried body and first rubber → preparation of rubber composition comprising preliminary composition and second rubber

(ii) Preparation of slurry containing cellulose nanofibers and optional dispersing agent → drying to prepare dried body → preparation of rubber composition comprising dried body, first rubber and second rubber

(iii) Preparation of slurry containing cellulose nanofibers, first rubber and optional dispersing agent → drying to prepare dried body → preparation of rubber composition comprising dried body and second rubber

(iv) Preparation of slurry containing cellulose nanofibers, first rubber, second rubber and optional dispersing agent → drying to prepare rubber composition

<Rubber composite, cured rubber product and molded article>

One aspect of the disclosure provides a rubber composite which is a kneaded blend of the rubber composition of this embodiment and a fourth rubber (base rubber), and a cured rubber product which is the cured product of the rubber composite. The mixing conditions for the rubber composition and fourth rubber are not particularly restricted, and for example, a kneader used for common rubber kneading, such as a Banbury mixer, kneader or open roll, may be used.

<Fourth rubber>

The specific aspects of the fourth rubber may be the same as for the third rubber. The total content of the cellulose nanofibers and the first and second rubbers with respect to 100 parts by mass as the total of the third and fourth rubbers is preferably 1 part by mass or greater, 3 parts by mass or greater or 5 parts by mass or greater, and preferably 50 parts by mass or lower, 45 parts by mass or lower or 40 parts by mass or lower. According to one aspect, the fourth rubber may be one or more selected from the group consisting of natural rubber, styrene-butadiene rubber, isoprene rubber and butadiene rubber, such as natural rubber. When the rubber composition comprises a third rubber, preferably all or some of the constituent monomers of the third rubber and fourth rubber are the same.

According to another aspect, a cured rubber product can be obtained by with a vulcanizing press in a manner compliant with JIS K6299. The rubber composite may be molded into a desired shape either alone or with other components, to produce a desired molded article. The method of combining the components and the method of molding are not particularly restricted, and may be selected depending on the desired molded article. Molding methods include, but are not limited to, the following:

(1) a method in which the third and/or fourth rubber comprises uncured rubber, and when the rubber composite is molded alone or together with additional components, the uncured rubber is cured before, during and/or after molding to obtain a molded article comprising the cured rubber product,

(2) a method in which the third and/or fourth rubber comprises uncured rubber, and after the cured rubber product obtained by curing the uncured rubber in the rubber composite has been formed, it is molded together with the additional components to obtain a molded article, and

(3) a method in which the third and fourth rubber are thermoplastic elastomers, and the rubber composite is melt molded either alone or together with additional components to obtain a molded article. The molding may be carried out by injection molding, extrusion molding, irregular shape extrusion molding, blow molding or compression molding.

<Physical properties of cured rubber product>

The tensile stress (modulus) of the cured rubber product at 100% elongation (M100) may be 2.0 MPa or higher, 3.0 MPa or higher or 4.0 MPa or higher according to one aspect, and 10.0 MPa or lower, 9.0 MPa or lower or 8.0 MPa or lower, according to another aspect.

The tensile stress of the cured rubber product at 300% elongation (M300) may be 3.0 MPa or higher, 5.0 MPa or higher or 6.0 MPa or higher, according to one aspect, and 20.0 MPa or lower, 15.0 MPa or lower or 13.0 MPa or lower, according to another aspect.

The ratio (M300/M100) of the tensile stress of the cured rubber product at 300% elongation (M300) with respect to the tensile stress at 100% elongation (M100) may be 1.3 or higher, 1.4 or higher or 1.5 or higher, according to one aspect, and 2.0 or lower or 1.8 or lower, according to another aspect.

The storage modulus of the cured rubber product may be 2.0 MPa or higher or 2.5 MPa or higher, according to one aspect, and 4.0 MPa or lower, 3.5 MPa or lower or 3.0 MPa or lower, according to another aspect.

Limiting the loss tangent of a cured rubber product to no higher than a specified value is advantageous from the viewpoint of fuel efficiency performance and low heat release when used in a tire, for example. From this viewpoint, the loss tangent may be 0.18 or lower, 0.15 or lower or 0.10 or lower, according to one aspect. On the other hand, limiting the loss tangent of the cured rubber product to at least a specified level is advantageous from the viewpoint of vibration resistance performance when used in a rubber vibration isolator, for example. From this viewpoint, the loss tangent may be 0.02 or higher, 0.03 or higher or 0.04 or higher, according to one aspect. The storage modulus and loss tangent are the values measured using a rheometer at 50°C, 10 Hz in torsion mode.

The cured rubber product may be used to form molded articles of various shapes. The molded articles can be used for a wide range of purposes including industrial machinery parts, general machine parts, automobile/railway/vehicle/ship/aerospace-related parts, electronic and electrical components, construction and civil engineering materials, daily household items, sports and leisure goods, wind power generation case members, and container and packaging materials. Examples of such purposes include molded articles for automobile parts (for example, tires, bumpers, fenders, door panels, various moldings, emblems, engine hoods, wheel caps, roofs, spoilers, exterior parts including aero parts, and interior parts including instrument panels, console boxes and trims), battery parts (such as on-vehicle secondary battery parts, lithium ion secondary battery parts, solid methanol battery fuel cases and fuel cell tubings), electronic and electrical device parts (for example, computers and peripheral devices, junction boxes, connectors, OA devices, televisions, videos, disc players, chassis, refrigerators, air conditioners and liquid crystal projectors), and daily household items (such as shoe outsoles). One aspect of the disclosure provides a tire, a rubber vibration isolator, shoe outsole or conveyor belt that comprises a cured rubber product of the disclosure.

EXAMPLES

Exemplary modes of the invention will now be further illustrated using Examples, with the understanding that the invention is not limited to these Examples.

<Evaluation methods>

<Rubber>

[Viscosity at 38°C]

The rubber viscosity was measured using a Brookfield viscometer. The results are shown in Table 1.

[Number-average molecular weight (Mn)]

The product catalog values were used.

<Rubber composition>

Each rubber composition was evaluated in the following manner.

<Rubber composition comprising first and second rubbers>

[Dispersibility of cellulose nanofibers]

Each rubber composition was observed under an optical microscope under the following conditions. A 1 mg sample was sandwiched between two cover glass panels and crushed and spread to a uniform thickness. The sample was placed on the stage of a BX51P polarizing microscope by Olympus Corp. An U-DICR differential interference prism by Olympus Corp. was inserted and the differential interference was observed. The dispersibility of the cellulose nanofibers was evaluated on the following scale.

A: Generally uniformly dispersed.
B: Dispersed, but with visible aggregation.
C: Extensive aggregation confirmed.

<Rubber composition further comprising third rubber (master batch)>

[Dispersibility of cellulose nanofibers]

For each rubber composition, the number of cellulose nanofiber aggregates of sizes of 20,000 $\mu m^2$ or greater were counted in each cross-sectional view of 10 randomly selected cross-sectional images of a 2 mm-side cuboid as observed by X-ray CT, the average number of aggregates per cross-section was calculated, and the dispersed state of the cellulose nanofibers was ranked on the following scale.

A: ≤5
B: >5 and ≤10
C: >10

The measuring conditions for X-ray CT were as follows.

Apparatus: X-CT Skyscan1272 by Bruker Corp.
Tube voltage: 40 kV, tube current: 100 μA
Pixel count: 2452 × 1640, pixel resolution: 1.2 μm, number of scans: 8
Scan: 0.2 degree, 180° scan

<Cured rubber product>

The cured rubber product was evaluated in the following manner.

(1) Surface smoothness

A small piece was cut out from the cured rubber sheet using scissors and placed on the stage of a confocal microscope (VK-X250 by Keyence Corp.), and a 10x objective lens was used to obtain a surface irregularity image. The arithmetic mean height (Sa) was calculated according to ISO25178, and indexed with the results for the reference Comparative Example as 100. A smaller index indicates more satisfactory surface smoothness.

(2) Tensile strength, tensile stress (modulus) and tensile elongation

The tensile strength, tensile stress at 100% elongation (100% modulus, M100), tensile stress at 300% elongation (300% modulus, M300) and tensile elongation were measured by the tensile test method of JIS K-6251, and the results were indexed with the reference Comparative Example as 100. A larger index indicates more satisfactory tensile strength, tensile stress and tensile elongation.

(3) Dispersibility of cellulose nanofibers

The cured rubber product was evaluated by the same procedure as described above under [Dispersibility of cellulose nanofibers] for the rubber composition, using 10 randomly selected cross-sectional images of a 2 mm-side cuboid as observed by X-ray CT.

(4) Orientation of cellulose nanofibers

The following data processing was carried out for the cellulose nanofibers observed under a transmission electron microscope, to calculate the degree of orientation of the cellulose nanofibers.

With the roll kneading direction of the cured rubber sheet as MD, the direction perpendicular to the roll kneading direction as TD and the thickness direction of the sheet as ND, a piece with a 500 μm set thickness was cut out on the MD-ND side of the sample using a cryomicrotome, and a transmission electron microscope (JEM-1400 by JEOL Corp.) was used for observation at 1000x magnification, with images being taken at 5 random visual field locations. The observed cellulose nanofibers were subjected to binarization processing and particle analysis using the image processing software ImageJ. For particle analysis, the cellulose nanofibers were approximated as ellipses, and for each of the cellulose nanofibers, the angle θ between the long axis direction of the ellipse and MD was obtained. The value of (3(cosθ) ^2-1)/2 was calculated for cellulose nanofibers obtained from 5 TEM images, and the average value was recorded as the degree of orientation. The orientation of the cellulose nanofibers was evaluated on the following scale.

A: Degree of orientation of ≥0.7
B: Degree of orientation of ≥0.5 and <0.7
C: Degree of orientation of <0.5

<Materials>

<First rubber>

Unmodified liquid rubber-1: Ricon184 (liquid butadiene-styrene random copolymer, Mn = 9,400) by Clay Valley Co.

Unmodified liquid rubber-2: LIR-30 (liquid polyisoprene, Mn = 28,000) by Kuraray Co., Ltd.
Unmodified liquid rubber-3: LBR-305 (liquid polybutadiene, Mn = 26,000) by Kuraray Co., Ltd.
Unmodified liquid rubber-4: L-FR-107 (liquid farnesene rubber, Mn = 130,000) by Kuraray Co., Ltd.
Unmodified liquid rubber-5: LIR-50 (liquid polyisoprene, Mn = 54,000) by Kuraray Co., Ltd.

<Second rubber>

Modified liquid rubber-1: LIR-403 (maleic anhydride-modified liquid polyisoprene, Mn = 34,000, number of modifying groups per molecular chain = 3) by Kuraray Co., Ltd.
Modified liquid rubber-1: LIR-410 (carboxy-modified liquid polyisoprene, Mn = 30,000, number of modifying groups per molecular chain = 10) by Kuraray Co., Ltd.
Modified liquid rubber-3: Ricon184 MA6 (maleic anhydride-modified liquid styrene-butadiene copolymer, Mn = 9,200, number of modifying groups per molecular chain = 6) by Clay Valley Co.
Modified liquid rubber-4: Ricon131 MA20 (maleic anhydride-modified liquid polybutadiene, Mn = 7,000, number of modifying groups per molecular chain = 11) by Clay Valley Co.

<Third rubber>

Natural rubber: RSS No. 3 (manufacturer: UNIMAC RUBBER CO., LTD. (Thailand), supplier: Marubeni Techno Rubber Corp.)
Polyisoprene: IR2200 by JSR
SBR-1: Produced by the procedure described below under <Production of SBR-1>.

<Fourth rubber>

Natural rubber: RSS No. 3 (manufacturer: UNIMAC RUBBER CO., LTD. (Thailand), supplier: Marubeni Techno Rubber Corp.)

Polyisoprene: IR2200 by JSR
SBR-1: Produced by the procedure described below under <Production of SBR-1>.
SBR-2: ASAPRENE$^{R}$ Y031 by Asahi Kasei Corp.
SBR-3: Nipol1$^{R}$ 502 by Zeon Corp.

<Production of SBR-1>

A single autoclave was used having an internal volume of 10 L, a ratio (L/D) of interior height (L) and diameter (D) of 4.0, an inlet at the bottom section, an outlet at the top section, and a stirrer and temperature control jacket. Also, one static mixer was connected at the starting material inlet of the reactor. After previously removing the impurities such as moisture, 1,3-butadiene was mixed at 20.2 g/min, styrene at 16.8 g/min and *n*-hexane at 137.6 g/min, to obtain a liquid mixture. Immediately before the liquid mixture entered the first base reactor, *n*-butyllithium for impurity inactivation treatment was supplied at 0.020 phm and the mixture was mixed with a static mixer and then continuously supplied to the bottom part of the first base reactor. Using 0.320 phm of 2,2-bis(2-oxolanyl)propane as a polar substance and 0.102 phm of NBL (normal-butyllithium) as a polymerization initiator, the mixture was continuously supplied to the bottom section of the reactor while maintaining a temperature of 82°C in the reactor, to obtain a rubber solution.

The rubber solution produced in the reactor was supplied from the top of the reactor to a static mixer, and reaction was conducted by continuously supplying M1 (1,3-bis(N,N-diglycidylaminomethyl)cyclohexane) just before the static mixer, as a modifying agent at a ratio of 1.0 equivalent with respect to lithium in the NBL that had been supplied as a polymerization initiator (calculating the amount of addition assuming that 4 mol of NBL reacts with 1 mol of M1), to obtain SBR-1.

<Cellulose nanofibers>

After immersing 3 parts by mass of cotton linter pulp in 27 parts by mass of water, the mixture was dispersed with a pulper. Next, 170 parts by mass of water was added to 30 parts by mass of the pulper-processed cotton linter pulp slurry (of which 3 parts by mass was cotton linter pulp), dispersing the latter in the water (1.5 mass% solid content), and a Model SDR14 Lab Refiner (pressurized DISK type) by Aikawa Iron Works Co. was used as a disc refiner apparatus for beating treatment of the aqueous dispersion for 30 minutes with a disc clearance of 1 mm. This was followed by thorough beating under conditions with clearance reduced to a level of near zero, to obtain a beaten aqueous dispersion (solid concentration: 1.5 mass%). The obtained beaten aqueous dispersion was directly subjected to micronization treatment 10 times using a high-pressure homogenizer (NSO15H by Niro Soavi) at an operating pressure of 100 MPa, to obtain a cellulose nanofiber slurry (solid concentration: 1.5 mass%). The mixture was then concentrated to a solid content of 10 mass% using a dehydrator, to obtain a cellulose nanofiber cake.

<Dispersing agent>

Nonionic dispersing agent: SANNIX GL-3000 (polyoxyethylene polyoxypropylene triol) by Sanyo Chemical Industries, Ltd.

<Vulcanizing aid>

Zinc oxide: Available from FujiFilm-Wako Pure Chemical Industries
Stearic acid: Available from FujiFilm-Wako Pure Chemical Industries

<Wax>

SUNNOC: Selected Special Wax (available from Ouchi Shinko Chemical Industrial Co., Ltd.)

<Aging inhibitor>

NOCRAC 6C: N-Phenyl-N'-(1,3-dimethylbutyl)-*p*-phenylenediamine (available from Ouchi Shinko Chemical Industrial Co., Ltd.)

<Vulcanization accelerator>

NOCCELER CZ: N-Cyclohexyl-2-benzothiazolylsulfenamide (available from Ouchi Shinko Chemical Industrial Co., Ltd.)
NOCCELER D: 1,3-Diphenylguanidine (available from Ouchi Shinko Chemical Industrial Co., Ltd.)

<Production of rubber composition>

<Rubber composition comprising first and second rubbers>

[Examples 1-1 to 1-11 and 1-21 to 1-24]

After placing 10 mass% of the cellulose nanofiber cake in a 200 ml PP cup, unmodified liquid rubber and a dispersing agent were added in the mixing ratios listed in Tables 2 and 3 to prepare aqueous dispersions with a cellulose nanofiber concentration of 10 mass%, as the final composition. The 200 ml PP cup was set in an ARE-310 rotating/revolving mixer by Thinky Corp. and mixed for 15 minutes in stirring mode (revolution at 2000 rpm, rotation at 800 rpm). Each modified liquid rubber was then added in the mixing ratio listed in Tables 2 and 3, and mixing was continued for 15 minutes in stirring mode (revolution at 2000 rpm, rotation at 800 rpm).
The obtained composition was thinly spread onto a releasable film and dried at 80°C using an SPH-201 by Espec Corp., after which it was pulverized for 30 seconds with an MS-05 Mini Speed Mill by Labonect Co., to obtain a rubber composition. The obtained rubber composition was evaluated for dispersibility using an optical microscope.

[Example 1-12]

In a beaker, 57.1 parts by mass of a liquid butadiene-styrene random copolymer (unmodified liquid rubber-1) and 200 parts by mass of maleic anhydride-modified liquid polyisoprene (modified liquid rubber-1) were dissolved in 2314 parts by mass of chloroform, and the solution was stirred. The liquid rubber solution was then spread out onto a TEFLON$^R$ vat and vacuum dried at 80°C to obtain a preliminary composition.
After placing 10 mass% of cellulose nanofiber cake in a 200 ml PP cup, the preliminary composition and a dispersing agent were added in the mixing ratio listed in Table 2 to prepare an aqueous dispersion with a cellulose nanofiber concentration of 10 mass%, as the final composition. The 200 ml PP cup was set in an ARE-310 rotating/revolving mixer by Thinky Corp. and mixed for 15 minutes in stirring mode (revolution at 2000 rpm, rotation at 800 rpm).
The obtained composition was thinly spread onto a releasable film and dried at 80°C using an SPH-201 by Espec Corp., after which it was pulverized for 30 seconds with an MS-05 Mini Speed Mill by Labonect Co., to obtain a rubber composition. The obtained rubber composition was evaluated for dispersibility using an optical microscope.

[Examples 1-13 to 1-20]

Rubber compositions were obtained in the same manner as Example 1-12, except that the amount of chloroform was 1414 parts by mass, and the amounts and types of the unmodified liquid rubber and modified liquid rubber were changed as shown in Table 2. Each of the obtained rubber compositions was evaluated for dispersibility using an optical microscope.

[Comparative Examples 1-1 to 1-9]

After placing 10 mass% of the cellulose nanofiber cake in a 200 ml PP cup, unmodified liquid rubber or modified liquid rubber and a dispersing agent were added in the mixing ratios listed in Table 3 to prepare aqueous dispersions with a cellulose nanofiber concentration of 10 mass%, as the final composition. The 200 ml PP cup was set in an ARE-310 rotating/revolving mixer by Thinky Corp. and mixed for 15 minutes in stirring mode (revolution at 2000 rpm, rotation at 800 rpm).
The obtained composition was thinly spread onto a releasable film and dried at 80°C using an SPH-201 by Espec Corp., after which it was pulverized for 30 seconds with an MS-05 Mini Speed Mill by Labonect Co., to obtain a rubber composition. Each of the obtained rubber compositions was evaluated for dispersibility using an optical microscope.

<Rubber composition further comprising third rubber (master batch)>

[Examples 2-1 to 2-21 and 2-35 to 2-36, and Comparative Examples 2-1 to 2-15]

After placing 10 mass% of the cellulose nanofiber cake in a 200 ml PP cup, unmodified liquid rubber and a dispersing agent were added in the mixing ratios listed in Tables 4 to 6 to prepare aqueous dispersions with a cellulose nanofiber concentration of 10 mass%, as the final composition. The 200 ml PP cup was set in an ARE-310 rotating/revolving mixer by Thinky Corp. and mixed for 15 minutes in stirring mode (revolution at 2000 rpm, rotation at 800 rpm).
The obtained composition was thinly spread onto a releasable film and dried at 80°C using an SPH-201 by Espec Corp., after which it was pulverized for 30 seconds with an MS-05 Mini Speed Mill by Labonect Co., to obtain a preliminary composition.
A closed kneader (0.35 L internal volume) equipped with a temperature control device was used for kneading for 5 minutes at 140°C, with addition of a third rubber, the preliminary composition, and modified liquid rubber according to the compositions listed in Tables 4 to 6, at a fill factor of 65%. The obtained kneaded blend was recovered and passed through a roll to obtain a sheet-like rubber composition (master batch). A portion was cut out from the sheet and the cellulose nanofiber dispersibility was evaluated by X-ray CT. The results are shown in Tables 4 to 6.

[Example 2-22]

A sheet-like rubber composition (master batch) was obtained in the same manner as Example 2-1, except that the kneading temperature was changed to 120°C. A portion was cut out from the sheet and the cellulose nanofiber dispersibility was evaluated by X-ray CT. The results are shown in Table 5.

[Example 2-23]

A sheet-like rubber composition (master batch) was obtained in the same manner as Example 2-1, except that the kneading temperature was changed to 130°C. A portion was cut out from the sheet and the cellulose nanofiber dispersibility was evaluated by X-ray CT. The results are shown in Table 5.

[Example 2-24]

A sheet-like rubber composition (master batch) was obtained in the same manner as Example 2-1, except that the kneading temperature was changed to 160°C. A portion was cut out from the sheet and the cellulose nanofiber dispersibility was evaluated by X-ray CT. The results are shown in Table 5.

[Example 2-25]

A preliminary composition was obtained in the same manner as Example 2-1.
A closed kneader (0.35 L internal volume) equipped with a temperature control device was used for kneading (first-stage kneading) for 5 minutes at 120°C, with addition of a third rubber, the preliminary composition, and modified liquid rubber according to the composition listed in Table 5, at a fill factor of 65%. For the subsequent second-stage kneading, the obtained kneaded blend was cooled to room temperature, and then kneaded again at 120°C for 3 minutes to improve dispersion of the cellulose nanofibers. The obtained kneaded blend was recovered and passed through a roll to obtain a sheet-like rubber composition (master batch). A portion was cut out from the sheet and the cellulose nanofiber dispersibility was evaluated by X-ray CT. The results are shown in Table 5.

[Example 2-26]

A sheet-like rubber composition (master batch) was obtained in the same manner as Example 2-25, except that the time for the second-stage kneading was 5 minutes instead of 3 minutes. A portion was cut out from the sheet and the cellulose nanofiber dispersibility was evaluated by X-ray CT. The results are shown in Table 5.

[Example 2-27]

A sheet-like rubber composition (master batch) was obtained in the same manner as Example 2-25, except that the temperature for both the first-stage and second-stage kneading was 140°C instead of 120°C. A portion was cut out from the sheet and the cellulose nanofiber dispersibility was evaluated by X-ray CT. The results are shown in Table 5.

[Example 2-28]

A sheet-like rubber composition (master batch) was obtained in the same manner as Example 2-26, except that the temperature for both the first-stage and second-stage kneading was 140°C instead of 120°C. A portion was cut out from the sheet and the cellulose nanofiber dispersibility was evaluated by X-ray CT. The results are shown in Table 5.

[Example 2-29]

A sheet-like rubber composition (master batch) was obtained in the same manner as Example 2-1, except that the fill factor was changed to 55%. A portion was cut out from the sheet and the cellulose nanofiber dispersibility was evaluated by X-ray CT. The results are shown in Table 5.

[Example 2-30]

A sheet-like rubber composition (master batch) was obtained in the same manner as Example 2-1, except that the fill factor was changed to 75%. A portion was cut out from the sheet and the cellulose nanofiber dispersibility was evaluated by X-ray CT. The results are shown in Table 5.

[Example 2-31]

A preliminary composition was obtained in the same manner as Example 2-1.

The third rubber, preliminary composition and modified liquid rubber were added to a 1.6 L Banbury mixer according to the composition listed in Table 5, at a fill factor of 65%, and the mixture was kneaded at 120°C for 5 minutes. The obtained kneaded blend was recovered and passed through a roll to obtain a sheet-like rubber composition (master batch). A portion was cut out from the sheet and the cellulose nanofiber dispersibility was evaluated by X-ray CT. The results are shown in Table 5.

[Example 2-32]

A sheet-like rubber composition (master batch) was obtained in the same manner as Example 2-31, except that the kneading temperature was changed to 140°C. A portion was cut out from the sheet and the cellulose nanofiber dispersibility was evaluated by X-ray CT. The results are shown in Table 5.

[Example 2-33]

A preliminary composition was obtained in the same manner as Example 2-1.

The third rubber, preliminary composition and modified liquid rubber were added to a 0.5 L kneader according to the composition listed in Table 5, at a fill factor of 65%, and the mixture was kneaded at 120°C for 5 minutes. The obtained kneaded blend was recovered and passed through a roll to obtain a sheet-like rubber composition (master batch). A portion was cut out from the sheet and the cellulose nanofiber dispersibility was evaluated by X-ray CT. The results are shown in Table 5.

[Example 2-34]

A sheet-like rubber composition (master batch) was obtained in the same manner as Example 2-33, except that the kneading temperature was changed to 140°C. A portion was cut out from the sheet and the cellulose nanofiber dispersibility was evaluated by X-ray CT. The results are shown in Table 5.

<Cured rubber product>

[Examples 3-1 to 3-32 and Comparative Examples 3-1 to 3-17]

A closed kneader (0.35 L internal volume) equipped with a temperature control device was used for kneading (first-stage kneading) for 3 minutes at 140°C, with addition of the rubber composition, a fourth rubber, zinc oxide, stearic acid, wax and a stabilizer, in the amounts listed in Tables 7 to 10, at a fill factor of 65%. For the subsequent second-stage kneading, the obtained kneaded blend was cooled to room temperature, and then kneaded again at 140°C for 3 minutes to improve dispersion of the cellulose nanofibers. After cooling, sulfur and a vulcanization accelerator were added, and then the mixture was kneaded with an open roll set to 70°C and molded into a sheet. The kneaded sheet was then vulcanized

with a 2.0 mm-thick die, using a vulcanizing press at 160°C for 15 minutes, to obtain a cured rubber sheet. The obtained cured rubber sheet was evaluated. The results are shown in Tables 7 to 10.

[Examples 4-1 to 4-48 and Comparative Examples 4-1 to 4-15]

A closed kneader (0.35 L internal volume) equipped with a temperature control device was used for kneading (first-stage kneading) for 3 minutes at 140°C, with addition of the master batch, a fourth rubber, zinc oxide, stearic acid, wax and a stabilizer, in the amounts listed in Tables 11 to 17, at a fill factor of 65%. For the subsequent second-stage kneading, the obtained kneaded blend was cooled to room temperature, and then kneaded again at 140°C for 3 minutes to improve dispersion of the cellulose nanofibers. After cooling, sulfur and a vulcanization accelerator were added, and then the mixture was kneaded with an open roll set to 70°C and molded into a sheet. The kneaded sheet was then vulcanized with a 2.0 mm-thick die, using a vulcanizing press at 160°C for 15 minutes, to obtain a cured rubber sheet. The obtained cured rubber sheet was evaluated. The results are shown in Tables 11 to 17.

[Table 1]

Table 1

| Liquid rubber | Unmodified liquid rubber-1 | Unmodified liquid rubber-2 | Unmodified liquid rubber-3 | Unmodified liquid rubber-4 | Unmodified liquid rubber-5 | Modified liquid rubber-1 | Modified liquid rubber-2 | Modified liquid rubber-3 | Modified liquid rubber-4 |
|---|---|---|---|---|---|---|---|---|---|
| | Ricon184 | LIR-30 | LBR-305 | L-FR-107 | LIR-50 | LIR-403 | LIR-410 | Ricon184 MA6 | Ricon131 MA20 |
| Viscosity (mPa·s) | 25,000 | 70,000 | 40,000 | 70,000 | 500,000 | 200,000 | 430,000 | 300,000 | 400,000 |

[Table 2]

Table 2: Rubber composition

| | | Units | Ex. 1-1 | Ex. 1-2 | Ex. 1-3 | Ex. 1-4 | Ex. 1-5 | Ex. 1-6 | Ex. 1-7 | Ex. 1-8 | Ex. 1-9 | Ex. 1-10 | Ex. 1-11 | Ex. 1-12 | Ex. 1-13 | Ex. 1-14 | Ex. 1-15 | Ex. 1-16 | Ex. 1-17 | Ex. 1-18 | Ex. 1-19 | Ex. 1-20 |
|---|---|---|---|---|---|---|---|---|---|---|---|---|---|---|---|---|---|---|---|---|---|---|
| Formulation of rubber composition | Cellulose nanofibers | pts. by mass | 100 | 100 | 100 | 100 | 100 | 100 | 100 | 100 | 100 | 100 | 100 | 100 | 100 | 100 | 100 | 100 | 100 | 100 | 100 | 100 |
| | Unmodified liquid rubber-1 | pts. by mass | 57.1 | 28.6 | 57.1 | 28.6 | | | | | 57.1 | 57.1 | 57.1 | 57.1 | 57.1 | | | | | 57.1 | 57.1 | 57.1 |
| | Unmodified liquid rubber-2 | pts. by mass | | | | | 57.1 | | | | | | | | | 57.1 | | | | | | |
| | Unmodified liquid rubber-3 | pts. by mass | | | | | | 57.1 | | | | | | | | | 57.1 | | | | | |
| | Unmodified liquid rubber-4 | pts. by mass | | | | | | | 57.1 | | | | | | | | | 57.1 | | | | |
| | Unmodified liquid rubber-5 | pts. by mass | | | | | | | | 57.1 | | | | | | | | | 57.1 | | | |
| | Modified liquid rubber-1 | pts. by mass | 200 | 200 | 100 | 100 | 100 | 100 | 100 | 100 | | | | 200 | 100 | 100 | 100 | 100 | 100 | | | |
| | Modified liquid rubber-2 | pts. by mass | | | | | | | | | 100 | | | | | | | | | 100 | | |
| | Modified liquid rubber-3 | pts. by mass | | | | | | | | | | 100 | | | | | | | | | 100 | |
| | Modified liquid rubber-4 | pts. by mass | | | | | | | | | | | 100 | | | | | | | | | 100 |
| | Dispersing agent | pts. by mass | 42.9 | 42.9 | 42.9 | 42.9 | 42.9 | 42.9 | 42.9 | 42.9 | 42.9 | 42.9 | 42.9 | 42.9 | 42.9 | 42.9 | 42.9 | 42.9 | 42.9 | 42.9 | 42.9 | 42.9 |
| Evaluation | $\eta 2/\eta 1$ | | 8 | 8 | 8 | 8 | 2.9 | 5 | 2.9 | 0.4 | 17.2 | 12 | 16 | 8 | 8 | 2.9 | 5 | 2.9 | 0.4 | 17.2 | 12 | 16 |
| | Dispersibility | | A | A | A | A | A | A | A | B | A | A | A | A | A | A | A | A | B | A | A | A |

[Table 3]

| Table 3: Rubber composition | | | | | | | | | | | | | | | |
|---|---|---|---|---|---|---|---|---|---|---|---|---|---|---|---|
| | | Units | Example 1-21 | Example 1-22 | Example 1-23 | Example 1-24 | Comp. Ex. 1-1 | Comp. Ex. 1-2 | Comp. Ex. 1-3 | Comp. Ex. 1-4 | Comp. Ex. 1-5 | Comp. Ex. 1-6 | Comp. Ex. 1-7 | Comp. Ex. 1-8 | Comp. Ex. 1-9 |
| Formulation of rubber composition | Cellulose nanofibers | pts. by mass | 100 | 100 | 100 | 100 | 100 | 100 | 100 | 100 | 100 | 100 | 100 | 100 | 100 |
| | Unmodified liquid rubber-1 | pts. by mass | 28.6 | 14.3 | 28.6 | 12.5 | 57.1 | | | | | | | | |
| | Unmodified liquid rubber-2 | pts. by mass | | | | | | 57.1 | | | | | | | |
| | Unmodified liquid rubber-3 | pts. by mass | | | | | | | 57.1 | | | | | | |
| | Unmodified liquid rubber-4 | pts. by mass | | | | | | | | 57.1 | | | | | |
| | Unmodified liquid rubber-5 | pts. by mass | | | | | | | | | 57.1 | | | | |
| | Modified liquid rubber-1 | pts. by mass | 50 | 23 | 16 | 26 | | | | | | 100 | | | |
| | Modified liquid rubber-2 | pts. by mass | | | | | | | | | | | 100 | | |
| | Modified liquid rubber-3 | pts. by mass | | | | | | | | | | | | 100 | |
| | Modified liquid rubber-4 | pts. by mass | | | | | € | | | | | | | | 100 |
| | Dispersing agent | pts. by mass | 14.3 | 14.3 | 7.1 | 12.5 | 42.9 | 42.9 | 42.9 | 42.9 | 42.9 | 42.9 | 42.9 | 42.9 | 42.9 |

(continued)

Table 3: Rubber composition

| | | Units | Example 1-21 | Example 1-22 | Example 1-23 | Example 1-24 | Comp. Ex. 1-1 | Comp. Ex. 1-2 | Comp. Ex. 1-3 | Comp. Ex. 1-4 | Comp. Ex. 1-5 | Comp. Ex. 1-6 | Comp. Ex. 1-7 | Comp. Ex. 1-8 | Comp. Ex. 1-9 |
|---|---|---|---|---|---|---|---|---|---|---|---|---|---|---|---|
| Evaluation | $\eta 2/\eta 1$ | | 8 | 8 | 8 | 8 | - | - | - | - | - | - | - | - | - |
| | Dispersibility | | A | A | A | A | C | C | C | C | C | C | C | C | C |

[Table 4]

Table 4: Rubber composition (master batch)

| | | | Units | Ex. 2-1 | Ex. 2-2 | Ex. 2-3 | Ex. 2-4 | Ex. 2-5 | Ex. 2-6 | Ex. 2-7 | Ex. 2-8 | Ex. 2-9 | Ex. 2-10 | Ex. 2-11 | Ex. 2-12 | Ex. 2-13 | Ex. 2-14 | Ex. 2-15 | Ex. 2-16 | Ex. 2-17 | Ex. 2-18 | Ex. 2-19 |
|---|---|---|---|---|---|---|---|---|---|---|---|---|---|---|---|---|---|---|---|---|---|---|
| Formulation of rubber composition | Preliminary composition | Cellulose nanofibers | pts. by mass | 25 | 25 | 50 | 50 | 100 | 100 | 50 | 50 | 50 | 50 | 50 | 50 | 50 | 50 | 50 | 50 | 50 | 50 | 50 |
| | | Unmodified liquid rubber-1 | pts. by mass | 14.3 | 7.1 | 28.6 | 14.3 | 57.1 | 28.6 | | | | | 28.6 | 28.6 | 28.6 | 28.6 | 14.3 | 28.6 | 57.1 | | 28.6 |
| | | Unmodified liquid rubber-2 | pts. by mass | | | | | | | 28.6 | | | | | | | | | | | 28.6 | |
| | | Unmodified liquid rubber-3 | pts. by mass | | | | | | | | 28.6 | | | | | | | | | | | |
| | | Unmodified liquid rubber-4 | pts. by mass | | | | | | | | | 28.6 | | | | | | | | | | |
| | | Unmodified liquid rubber-5 | pts. by mass | | | | | | | | | | 28.6 | | | | | | | | | |
| | | Dispersing agent | pts. by mass | 10.7 | 10.7 | 21.4 | 21.4 | 42.6 | 42.6 | 21.4 | 21.4 | 21.4 | 21.4 | 21.4 | 21.4 | 21.4 | 21.4 | 10.7 | 21.4 | 42.6 | 21.4 | 21.4 |
| | Modified liquid rubber (2nd rubber) | Modified liquid rubber-1 | pts. by mass | 50 | 50 | 50 | 50 | 100 | 100 | 50 | 50 | 50 | 50 | | | | 50 | 50 | 50 | 50 | 50 | |
| | | Modified liquid rubber-2 | pts. by mass | | | | | | | | | | | 50 | | | | | | | | |
| | | Modified liquid rubber-3 | pts. by mass | | | | | | | | | | | | 50 | | | | | | | 50 |
| | | Modified liquid rubber-4 | pts. by mass | | | | | | | | | | | | | 50 | | | | | | |
| | 3rd rubber | Natural rubber | pts. by mass | 100 | 100 | 100 | 100 | 100 | 100 | 100 | 100 | 100 | 100 | 100 | 100 | 100 | | | | | | |
| | | Polyisoprene | pts. by mass | | | | | | | | | | | | | | 100 | | | | | |
| | | SBR-1 | pts. by mass | | | | | | | | | | | | | | | 100 | 100 | 100 | 100 | 100 |
| Evaluation | η2/η1 | | | 8 | 8 | 8 | 8 | 8 | 8 | 2.9 | 5 | 2.9 | 0.4 | 17.2 | 12 | 16 | 8 | 8 | 8 | 8 | 2.9 | 12 |
| | Dispersibility (X-CT) | | | A | A | A | A | A | A | A | A | A | B | A | A | A | A | A | A | A | A | A |

[0258]

[Table 5]

Table 5: Rubber composition (master batch)

| | | | Units | Ex. 2-20 | Ex. 2-21 | Ex. 2-22 | Ex. 2-23 | Ex. 2-24 | Ex. 2-25 | Ex. 2-26 | Ex. 2-27 | Ex. 2-28 | Ex. 2-29 | Ex. 2-30 | Ex. 2-31 | Ex. 2-32 | Ex. 2-33 | Ex. 2-34 | Ex. 2-35 | Ex. 2-36 |
|---|---|---|---|---|---|---|---|---|---|---|---|---|---|---|---|---|---|---|---|---|
| Formulation of rubber composition | Preliminary composition | Cellulose nanofibers | pts. by mass | 120 | 120 | 50 | 50 | 50 | 50 | 50 | 50 | 50 | 50 | 50 | 50 | 50 | 50 | 50 | 78 | 123 |
| | | Unmodified liquid rubber-1 | pts. by mass | 68.6 | 34.3 | 28.6 | 28.6 | 28.6 | 28.6 | 28.6 | 28.6 | 28.6 | 28.6 | 28.6 | 28.6 | 28.6 | 28.6 | 28.6 | 22 | 15 |
| | | Unmodified liquid rubber-2 | pts. by mass | | | | | | | | | | | | | | | | | |
| | | Unmodified liquid rubber-3 | pts. by mass | | | | | | | | | | | | | | | | | |
| | | Unmodified liquid rubber-4 | pts. by mass | | | | | | | | | | | | | | | | | |
| | | Unmodified liquid rubber-5 | pts. by mass | | | | | | | | | | | | | | | | | |
| | | Dispersing agent | pts. by mass | 51.4 | 51.4 | 21.4 | 21.4 | 21.4 | 21.4 | 21.4 | 21.4 | 21.4 | 21.4 | 21.4 | 21.4 | 21.4 | 21.4 | 21.4 | 11 | 15 |

(continued)

Table 5: Rubber composition (master batch)

| | | | Units | Ex. 2-20 | Ex. 2-21 | Ex. 2-22 | Ex. 2-23 | Ex. 2-24 | Ex. 2-25 | Ex. 2-26 | Ex. 2-27 | Ex. 2-28 | Ex. 2-29 | Ex. 2-30 | Ex. 2-31 | Ex. 2-32 | Ex. 2-33 | Ex. 2-34 | Ex. 2-35 | Ex. 2-36 |
|---|---|---|---|---|---|---|---|---|---|---|---|---|---|---|---|---|---|---|---|---|
| | Modified liquid rubber (2nd rubber) | Modified liquid rubber-1 | pts. by mass | 60 | 60 | 50 | 50 | 50 | 50 | 50 | 50 | 50 | 50 | 50 | 50 | 50 | 50 | 50 | 39 | 62 |
| | | Modified liquid rubber-2 | pts. by mass | | | | | | | | | | | | | | | | | |
| | | Modified liquid rubber-3 | pts. by mass | | | | | | | | | | | | | | | | | |
| | | Modified liquid rubber-4 | pts. by mass | | | | | | | | | | | | | | | | | |
| | 3rd rubber | Natural rubber | pts. by mass | 100 | 100 | 100 | 100 | 100 | 100 | 100 | 100 | 100 | 100 | 100 | 100 | 100 | 100 | 100 | 100 | 100 |
| | | Polyisoprene | pts. by mass | | | | | | | | | | | | | | | | | |
| | | SBR-1 | pts. by mass | | | | | | | | | | | | | | | | | |
| Evaluation | η2/η1 | | | 8 | 8 | 8 | 8 | 8 | 8 | 8 | 8 | 8 | 8 | 8 | 8 | 8 | 8 | 8 | 8 | 8 |
| | Dispersibility (X-CT) | | | A | A | A | A | A | A | A | A | A | A | A | A | A | A | A | A | A |

[Table 6]

Table 6: Rubber composition (master batch)

| | | | Units | Comp. Ex. 2-1 | Comp. Ex. 2-2 | Comp. Ex. 2-3 | Comp. Ex. 2-4 | Comp. Ex. 2-5 | Comp. Ex. 2-6 | Comp. Ex. 2-7 | Comp. Ex. 2-8 | Comp. Ex. 2-9 | Comp. Ex. 2-10 | Comp. Ex. 2-11 | Comp. Ex. 2-12 | Comp. Ex. 2-13 | Comp. Ex. 2-14 | Comp. Ex. 2-15 |
|---|---|---|---|---|---|---|---|---|---|---|---|---|---|---|---|---|---|---|
| Formulation of rubber composition | Preliminary composition | Cellulose nanofibers | pts. by mass | 50 | 50 | 50 | 50 | 50 | 50 | 50 | 50 | 50 | 50 | 50 | 50 | 50 | 50 | 50 |
| | | Unmodified liquid rubber-1 | pts. by mass | 28.6 | | | | | | | | | 28.6 | | 28.6 | | | |
| | | Unmodified liquid rubber-2 | pts. by mass | | 28.6 | | | | | | | | | | | 28.6 | | |
| | | Unmodified liquid rubber-3 | pts. by mass | | | 28.6 | | | | | | | | | | | | |
| | | Unmodified liquid rubber-4 | pts. by mass | | | | 28.6 | | | | | | | | | | | |
| | | Unmodified liquid rubber-5 | pts. by mass | | | | | 28.6 | | | | | | | | | | |
| | | Dispersing agent | pts. by mass | 21.4 | 21.4 | 21.4 | 21.4 | 21.4 | 21.4 | 21.4 | 21.4 | 21.4 | 21.4 | 21.4 | 21.4 | 21.4 | 21.4 | 21.4 |
| | Modified liquid rubber (2nd rubber) | Modified liquid rubber-1 | pts. by mass | | | | | | 50 | | | | | 50 | | | 50 | |
| | | Modified liquid rubber-2 | pts. by mass | | | | | | | 50 | | | | | | | | |
| | | Modified liquid rubber-3 | pts. by mass | | | | | | | | 50 | | | | | | | 50 |

(continued)

| Table 6: Rubber composition (master batch) | | | | | | | | | | | | | | | | | | |
|---|---|---|---|---|---|---|---|---|---|---|---|---|---|---|---|---|---|---|
| | | | Units | Comp. Ex. 2-1 | Comp. Ex. 2-2 | Comp. Ex. 2-3 | Comp. Ex. 2-4 | Comp. Ex. 2-5 | Comp. Ex. 2-6 | Comp. Ex. 2-7 | Comp. Ex. 2-8 | Comp. Ex. 2-9 | Comp. Ex. 2-10 | Comp. Ex. 2-11 | Comp. Ex. 2-12 | Comp. Ex. 2-13 | Comp. Ex. 2-14 | Comp. Ex. 2-15 |
| | | Modified liquid rubber-4 | pts. by mass | | | | | | | | | 50 | | | | | | |
| | 3rd rubber | Natural rubber | pts. by mass | 100 | 100 | 100 | 100 | 100 | 100 | 100 | 100 | 100 | | | | | | |
| | | Polyisoprene | pts. by mass | | | | | | | | | | 100 | 100 | | | | |
| | | SBR-1 | pts. by mass | | | | | | | | | | | | 100 | 100 | 100 | 100 |
| Evaluation | η2/η1 | | | - | - | - | - | - | - | - | - | - | - | - | - | - | - | - |
| | Dispersibility (X-CT) | | | C | C | C | C | C | C | C | C | C | C | C | C | C | C | C |

[Table 7]

Table 7: Cured rubber

| | | | Units | Ex. 3-1 | Ex. 3-2 | Ex. 3-3 | Ex. 3-4 | Ex. 3-5 | Ex. 3-6 | Ex. 3-7 | Ex. 3-8 | Ex. 3-9 | Ex. 3-10 | Ex. 3-11 | Ex. 3-12 | Ex. 3-13 | Ex. 3-14 | Ex. 3-15 | Ex. 3-16 | Ex. 3-17 | Ex. 3-18 | Ex. 3-19 | Ex. 3-20 |
|---|---|---|---|---|---|---|---|---|---|---|---|---|---|---|---|---|---|---|---|---|---|---|---|
| Composi-tion | Rubber composi-tion | Type | | Ex. 1-1 | Ex. 1-2 | Ex. 1-3 | Ex. 1-4 | Ex. 1-5 | Ex. 1-6 | Ex. 1-7 | Ex. 1-8 | Ex. 1-9 | Ex. 1-10 | Ex. 1-11 | Ex. 1-12 | Ex. 1-13 | Ex. 1-14 | Ex. 1-15 | Ex. 1-16 | Ex. 1-17 | Ex. 1-18 | Ex. 1-19 | Ex. 1-20 |
| | | Amount | pts. by mass | 20 | 18.6 | 15 | 13.6 | 15 | 15 | 15 | 15 | 15 | 15 | 15 | 20 | 15 | 15 | 15 | 15 | 15 | 15 | 15 | 15 |
| | 4th rubber | Natural rubber | pts. by mass | 100 | 100 | 100 | 100 | 100 | 100 | 100 | 100 | 100 | 100 | 100 | 100 | 100 | 100 | 100 | 100 | 100 | 100 | 100 | 100 |
| | | Polyisoprene | pts. by mass | | | | | | | | | | | | | | | | | | | | |
| | | SBR-1 | pts. by mass | | | | | | | | | | | | | | | | | | | | |
| | | SBR-2 | pts. by mass | | | | | | | | | | | | | | | | | | | | |
| | | SBR-3 | pts. by mass | | | | | | | | | | | | | | | | | | | | |
| | Additional components | Sulfur | pts. by mass | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 |
| | | Vulcanization accelerator: NOCCELER CZ | pts. by mass | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 |
| | | Vulcanization accelerator: NOCCELER D | pts. by mass | 2 | 2 | 2 | 2 | 2 | 2 | 2 | 2 | 2 | 2 | 2 | 2 | 2 | 2 | 2 | 2 | 2 | 2 | 2 | 2 |
| | | Vulcanizing aid: zinc oxide | pts. by mass | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | | Vulcanizing aid: stearic acid | pts. by mass | 2 | 2 | 2 | 2 | 2 | 2 | 2 | 2 | 2 | 2 | 2 | 2 | 2 | 2 | 2 | 2 | 2 | 2 | 2 | 2 |
| | | Wax: SUNNOC | pts. by mass | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | | Stabilizer: NOCRAC 6C | pts. by mass | 2 | 2 | 2 | 2 | 2 | 2 | 2 | 2 | 2 | 2 | 2 | 2 | 2 | 2 | 2 | 2 | 2 | 2 | 2 | 2 |
| Cured product evalua-tion | Surface smoothness | | Index | 84 | 88 | 83 | 90 | 85 | 87 | 88 | 95 | 91 | 88 | 87 | 86 | 85 | 88 | 89 | 87 | 96 | 93 | 86 | 85 |
| | M100 | | Index | 108 | 104 | 111 | 104 | 106 | 104 | 109 | 101 | 105 | 108 | 103 | 111 | 112 | 107 | 105 | 106 | 103 | 109 | 107 | 108 |
| | M300 | | Index | 110 | 109 | 113 | 106 | 107 | 109 | 111 | 104 | 102 | 104 | 108 | 113 | 114 | 110 | 108 | 109 | 104 | 109 | 108 | 110 |
| | Tensile strength | | Index | 101 | 105 | 106 | 100 | 102 | 106 | 103 | 99 | 106 | 103 | 102 | 105 | 106 | 105 | 105 | 102 | 100 | 103 | 104 | 103 |
| | Tensile elongation | | Index | 110 | 111 | 115 | 108 | 111 | 109 | 109 | 107 | 109 | 108 | 109 | 113 | 112 | 108 | 108 | 109 | 106 | 108 | 108 | 111 |
| | X-CT | | | A | A | A | A | A | A | A | B | A | A | A | A | A | A | A | A | B | A | A | A |
| | Orientation | | | A | A | A | A | A | A | A | B | A | A | A | A | A | A | A | A | B | A | A | A |

**[0259]**

[Table 8]

| Table 8: Cured rubber | | | | | | | | | | | | |
|---|---|---|---|---|---|---|---|---|---|---|---|---|
| | | | Units | Comp. Ex. 3-1 | Comp. Ex. 3-2 | Comp. Ex. 3-3 | Comp. Ex. 3-4 | Comp. Ex. 3-5 | Comp. Ex. 3-6 | Comp. Ex. 3-7 | Comp. Ex. 3-8 | Comp. Ex. 3-9 |
| Composition | Rubber com-position | Type | | Comp. Ex. 1-1 | Comp. Ex. 1-2 | Comp. Ex. 1-3 | Comp. Ex. 1-4 | Comp. Ex. 1-5 | Comp. Ex. 1-6 | Comp. Ex. 1-7 | Comp. Ex. 1-8 | Comp. Ex. 1-9 |
| | | Amount | pts. by mass | 10 | 10 | 10 | 10 | 10 | 12.1 | 12.1 | 12.1 | 12.1 |
| | 4th rubber | Natural rubber | pts. by mass | 100 | 100 | 100 | 100 | 100 | 100 | 100 | 100 | 100 |
| | | Polyisoprene | pts. by mass | | | | | | | | | |
| | | SBR-1 | pts. by mass | | | | | | | | | |
| | | SBR-2 | pts. by mass | | | | | | | | | |
| | | SBR-3 | pts. by mass | | | | | | | | | |
| | Additional components | Sulfur | pts. by mass | 1.7 | 1.7 | 1.7 | 1.7 | 1.7 | 1.7 | 1.7 | 1.7 | 1.7 |
| | | Vulcanization accelerator: NOCCE-LER CZ | pts. by mass | 1.7 | 1.7 | 1.7 | 1.7 | 1.7 | 1.7 | 1.7 | 1.7 | 1.7 |
| | | Vulcanization accelerator: NOCCE-LER D | pts. by mass | 2 | 2 | 2 | 2 | 2 | 2 | 2 | 2 | 2 |
| | | Vulcanizing aid: zinc oxide | pts. by mass | 2.5 | 2.5 | 2.5 | 2.5 | 2.5 | 2.5 | 2.5 | 2.5 | 2.5 |
| | | Vulcanizing aid: stearic acid | pts. by mass | 2 | 2 | 2 | 2 | 2 | 2 | 2 | 2 | 2 |
| | | Wax: SUNNOC | pts. by mass | 1.5 | 1.5 | 1.5 | 1.5 | 1.5 | 1.5 | 1.5 | 1.5 | 1.5 |

(continued)

Table 8: Cured rubber

| | | | Units | Comp. Ex. 3-1 | Comp. Ex. 3-2 | Comp. Ex. 3-3 | Comp. Ex. 3-4 | Comp. Ex. 3-5 | Comp. Ex. 3-6 | Comp. Ex. 3-7 | Comp. Ex. 3-8 | Comp. Ex. 3-9 |
|---|---|---|---|---|---|---|---|---|---|---|---|---|
| | | Stabilizer: NOCRAC 6C | pts. by mass | 2 | 2 | 2 | 2 | 2 | 2 | 2 | 2 | 2 |
| Cured product evaluation | Surface smoothness | | Index | 110 | 113 | 114 | 112 | 118 | 100 | 111 | 104 | 102 |
| | M100 | | Index | 90 | 88 | 86 | 86 | 81 | 100 | 94 | 94 | 93 |
| | M300 | | Index | 91 | 88 | 88 | 90 | 82 | 100 | 95 | 99 | 98 |
| | Tensile strength | | Index | 100 | 98 | 96 | 97 | 88 | 100 | 98 | 99 | 99 |
| | Tensile elongation | | Index | 102 | 100 | 101 | 100 | 99 | 100 | 99 | 99 | 100 |
| | X-CT | | | C | C | C | C | C | C | C | C | C |
| | Orientation | | | C | C | C | C | C | C | C | C | C |

[Table 9]

| Table 9: Cured rubber | | | | | | | |
|---|---|---|---|---|---|---|---|
| | | | Units | Example 3-21 | Example 3-22 | Comp. Example 3-10 | Comp. Example 3-11 |
| Composition | Rubber composition | Type | | Example 1-3 | Example 1-13 | Comp. Example 1-1 | Comp. Example 1-6 |
| | | Amount | pts. by mass | 15 | 15 | 10 | 12.1 |
| | 4th rubber | Natural rubber | pts. by mass | | | | |
| | | Polyisoprene | pts. by mass | 100 | 100 | 100 | 100 |
| | | SBR-1 | pts. by mass | | | | |
| | | SBR-2 | pts. by mass | | | | |
| | | SBR-3 | pts. by mass | | | | |
| | Additional components | Sulfur | pts. by mass | 1.7 | 1.7 | 1.7 | 1.7 |
| | | Vulcanization accelerator: NOCCELER CZ | pts. by mass | 1.7 | 1.7 | 1.7 | 1.7 |
| | | Vulcanization accelerator: NOCCELER D | pts. by mass | 2 | 2 | 2 | 2 |
| | | Vulcanizing aid: zinc oxide | pts. by mass | 2.5 | 2.5 | 2.5 | 2.5 |
| | | Vulcanizing aid: stearic acid | pts. by mass | 2 | 2 | 2 | 2 |
| | | Wax: SUNNOC | pts. by mass | 1.5 | 1.5 | 1.5 | 1.5 |
| | | Stabilizer: NOCRAC 6C | pts. by mass | 2 | 2 | 2 | 2 |
| Cured product evaluation | Surface smoothness | | Index | 85 | 86 | 111 | 100 |
| | M100 | | Index | 110 | 108 | 94 | 100 |
| | M300 | | Index | 109 | 108 | 93 | 100 |
| | Tensile strength | | Index | 103 | 102 | 100 | 100 |
| | Tensile elongation | | Index | 113 | 108 | 101 | 100 |
| | X-CT | | | A | A | C | C |
| | Orientation | | | A | A | C | C |

[0259]

[Table 10]

| Table 10: Cured rubber | | | | | | | | | | | | | | | | | | | |
|---|---|---|---|---|---|---|---|---|---|---|---|---|---|---|---|---|---|---|---|
| | | | Units | Ex. 3-23 | Ex. 3-24 | Comp. Ex. 3-12 | Comp. Ex. 3-13 | Ex. 3-25 | Ex. 3-26 | Comp. Ex. 3-14 | Comp. Ex. 3-15 | Ex. 3-27 | Ex. 3-28 | Comp. Ex. 3-16 | Comp. Ex. 3-17 | Ex. 3-29 | Ex. 3-30 | Ex. 3-31 | Ex. 3-32 |
| Composition | Rubber composition | Type | | Ex. 1-3 | Ex. 1-13 | Comp. Ex. 1-1 | Comp. Ex. 1-6 | Ex. 1-3 | Ex. 1-13 | Comp. Ex. 1-1 | Comp. Ex. 1-6 | Ex. 1-3 | Ex. 1-13 | Comp. Ex. 1-1 | Comp. Ex. 1-6 | Ex. 1-21 | Ex. 1-22 | Ex. 1-23 | Ex. 1-24 |
| | | Amount | pts. by mass | 15 | 15 | 10 | 12.1 | 10 | 12.1 | 10 | 12.1 | 10 | 12.1 | 10 | 12.1 | 9.6 | 7.6 | 7.6 | 7.6 |
| | 4th rubber | Natural rubber | pts. by mass | | | | | | | | | | | | | 100 | 100 | 100 | 100 |
| | | Polyisoprene | pts. by mass | | | | | | | | | | | | | | | | |
| | | SBR-1 | pts. by mass | 100 | 100 | 100 | 100 | | | | | | | | | | | | |
| | | SBR-2 | pts. by mass | | | | | 100 | 100 | 100 | 100 | | | | | | | | |
| | | SBR-3 | pts. by mass | | | | | | | | | 100 | 100 | 100 | 100 | | | | |
| | Additional components | Sulfur | pts. by mass | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 |
| | | Vulcanization accelerator: NOCCELER CZ | pts. by mass | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 |

(continued)

Table 10: Cured rubber

| | | | Units | Ex. 3-23 | Ex. 3-24 | Comp. Ex. 3-12 | Comp. Ex. 3-13 | Ex. 3-25 | Ex. 3-26 | Comp. Ex. 3-14 | Comp. Ex. 3-15 | Ex. 3-27 | Ex. 3-28 | Comp. Ex. 3-16 | Comp. Ex. 3-17 | Ex. 3-29 | Ex. 3-30 | Ex. 3-31 | Ex. 3-32 |
|---|---|---|---|---|---|---|---|---|---|---|---|---|---|---|---|---|---|---|---|
| | | Vulcanization accelerator: NOCCELER D | pts. by mass | 2 | 2 | 2 | 2 | 2 | 2 | 2 | 2 | 2 | 2 | 2 | 2 | 2 | 2 | 2 | 2 |
| | | Vulcanizing aid: zinc oxide | pts. by mass | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | | Vulcanizing aid: stearic acid | pts. by mass | 2 | 2 | 2 | 2 | 2 | 2 | 2 | 2 | 2 | 2 | 2 | 2 | 2 | 2 | 2 | 2 |
| | | Wax: SUNNOC | pts. by mass | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | | Stabilizer: NOCRAC 6C | pts. by mass | 2 | 2 | 2 | 2 | 2 | 2 | 2 | 2 | 2 | 2 | 2 | 2 | 2 | 2 | 2 | 2 |
| Cured product evaluation | Surface smoothness | | Index | 87 | 89 | 112 | 100 | 85 | 88 | 113 | 100 | 89 | 90 | 113 | 100 | 85 | 86 | 85 | 86 |
| | M100 | | Index | 111 | 107 | 95 | 100 | 113 | 108 | 87 | 100 | 109 | 106 | 90 | 100 | 112 | 109 | 110 | 110 |
| | M300 | | Index | 112 | 109 | 94 | 100 | 111 | 108 | 89 | 100 | 110 | 108 | 87 | 100 | 113 | 107 | 111 | 112 |
| | Tensile strength | | Index | 103 | 103 | 98 | 100 | 104 | 102 | 99 | 100 | 102 | 102 | 97 | 100 | 109 | 107 | 108 | 108 |
| | Tensile elongation | | Index | 113 | 109 | 100 | 100 | 115 | 111 | 101 | 100 | 109 | 108 | 102 | 100 | 113 | 115 | 112 | 115 |
| | X-CT | | | A | A | C | C | C | C | C | C | C | C | C | C | A | A | A | A |
| | Orientation | | | A | A | C | C | C | C | C | C | C | C | C | C | A | A | A | A |

[0259]

[Table 11]

| Table 11: Cured rubber | | | | | | | | | | | | | | | | | | |
|---|---|---|---|---|---|---|---|---|---|---|---|---|---|---|---|---|---|---|
| | | | Units | Ex. 4-1 | Ex. 4-2 | Ex. 4-3 | Ex. 4-4 | Ex. 4-5 | Ex. 4-6 | Ex. 4-7 | Ex. 4-8 | Ex. 4-9 | Ex. 4-10 | Ex. 4-11 | Ex. 4-12 | Ex. 4-13 | Ex. 4-14 | Ex. 4-15 |
| Composition | Rubber composition | Type | | Ex. 2-1 | Ex. 2-2 | Ex. 2-3 | Ex. 2-4 | Ex. 2-5 | Ex. 2-6 | Ex. 2-7 | Ex. 2-8 | Ex. 2-9 | Ex. 2-10 | Ex. 2-11 | Ex. 2-12 | Ex. 2-13 | Ex. 2-14 | Ex. 2-16 |
| | | Amount | pts. by mass | 40 | 38.6 | 25 | 23.6 | 20 | 18.6 | 25 | 25 | 25 | 25 | 25 | 25 | 25 | 25 | 25 |
| | 4th rubber | Natural rubber | pts. by mass | 100 | 100 | 100 | 100 | 100 | 100 | 100 | 100 | 100 | 100 | 100 | 100 | 100 | 100 | 100 |
| | | Polyisoprene | pts. by mass | | | | | | | | | | | | | | | |
| | | SBR-1 | pts. by mass | | | | | | | | | | | | | | | |
| | Additional components | Sulfur | pts. by mass | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 |
| | | Vulcanization accelerator: NOCCELER CZ | pts. by mass | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 |
| | | Vulcanization accelerator: NOCCELER D | pts. by mass | 2 | 2 | 2 | 2 | 2 | 2 | 2 | 2 | 2 | 2 | 2 | 2 | 2 | 2 | 2 |
| | | Vulcanizing aid: zinc oxide | pts. by mass | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | | Vulcanizing aid: stearic acid | pts. by mass | 2 | 2 | 2 | 2 | 2 | 2 | 2 | 2 | 2 | 2 | 2 | 2 | 2 | 2 | 2 |
| | | Wax: SUNNOC | pts. by mass | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | | Stabilizer: NOCRAC 6C | pts. by mass | 2 | 2 | 2 | 2 | 2 | 2 | 2 | 2 | 2 | 2 | 2 | 2 | 2 | 2 | 2 |

(continued)

Table 11: Cured rubber

| | | Units | Ex. 4-1 | Ex. 4-2 | Ex. 4-3 | Ex. 4-4 | Ex. 4-5 | Ex. 4-6 | Ex. 4-7 | Ex. 4-8 | Ex. 4-9 | Ex. 4-10 | Ex. 4-11 | Ex. 4-12 | Ex. 4-13 | Ex. 4-14 | Ex. 4-15 |
|---|---|---|---|---|---|---|---|---|---|---|---|---|---|---|---|---|---|
| Cured product evaluation | Surface smoothness | Index | 86 | 90 | 84 | 92 | 83 | 91 | 88 | 92 | 91 | 96 | 92 | 91 | 93 | 95 | 96 |
| | M100 | Index | 113 | 108 | 114 | 108 | 115 | 110 | 110 | 108 | 111 | 105 | 109 | 108 | 106 | 102 | 104 |
| | M300 | Index | 116 | 110 | 118 | 111 | 121 | 112 | 113 | 107 | 114 | 105 | 107 | 107 | 118 | 103 | 103 |
| | Tensile strength | Index | 101 | 100 | 105 | 101 | 103 | 102 | 104 | 104 | 103 | 99 | 106 | 106 | 104 | 102 | 101 |
| | Tensile elongation | Index | 104 | 104 | 106 | 102 | 103 | 104 | 105 | 103 | 103 | 101 | 104 | 102 | 103 | 103 | 102 |
| | X-CT | | A | A | A | A | A | A | A | A | A | B | A | A | A | A | B |
| | Orientation | | A | A | A | A | A | A | A | A | A | B | A | A | A | A | A |

[0259]

[Table 12]

| Table 12: Cured rubber | | | | | | | | | | | | |
|---|---|---|---|---|---|---|---|---|---|---|---|---|
| | | | Units | Comp. Ex. 4-1 | Comp. Ex. 4-2 | Comp. Ex. 4-3 | Comp. Ex. 4-4 | Comp. Ex. 4-5 | Comp. Ex. 4-6 | Comp. Ex. 4-7 | Comp. Ex. 4-8 | Comp. Ex. 4-9 |
| Composition | Rubber composition | Type | | Comp. Ex. 2-1 | Comp. Ex. 2-2 | Comp. Ex. 2-3 | Comp. Ex. 2-4 | Comp. Ex. 2-5 | Comp. Ex. 2-6 | Comp. Ex. 2-7 | Comp. Ex. 2-8 | Comp. Ex. 2-9 |
| | | Amount | pts. by mass | 20 | 20 | 20 | 20 | 20 | 22.1 | 22.1 | 22.1 | 22.1 |
| | 4th rubber | Natural rubber | pts. by mass | 100 | 100 | 100 | 100 | 100 | 100 | 100 | 100 | 100 |
| | | Polyisoprene | pts. by mass | | | | | | | | | |
| | | SBR-1 | pts. by mass | | | | | | | | | |
| | Additional components | Sulfur | pts. by mass | 1.7 | 1.7 | 1.7 | 1.7 | 1.7 | 1.7 | 1.7 | 1.7 | 1.7 |
| | | Vulcanization accelerator: NOCCELER CZ | pts. by mass | 1.7 | 1.7 | 1.7 | 1.7 | 1.7 | 1.7 | 1.7 | 1.7 | 1.7 |
| | | Vulcanization accelerator: NOCCELER D | pts. by mass | 2 | 2 | 2 | 2 | 2 | 2 | 2 | 2 | 2 |
| | | Vulcanizing aid: zinc oxide | pts. by mass | 2.5 | 2.5 | 2.5 | 2.5 | 2.5 | 2.5 | 2.5 | 2.5 | 2.5 |
| | | Vulcanizing aid: stearic acid | pts. by mass | 2 | 2 | 2 | 2 | 2 | 2 | 2 | 2 | 2 |
| | | Wax: SUNNOC | pts. by mass | 1.5 | 1.5 | 1.5 | 1.5 | 1.5 | 1.5 | 1.5 | 1.5 | 1.5 |
| | | Stabilizer: NOCRAC 6C | pts. by mass | 2 | 2 | 2 | 2 | 2 | 2 | 2 | 2 | 2 |

(continued)

| Table 12: Cured rubber | | | | | | | | | | | |
|---|---|---|---|---|---|---|---|---|---|---|---|
| | | Units | Comp. Ex. 4-1 | Comp. Ex. 4-2 | Comp. Ex. 4-3 | Comp. Ex. 4-4 | Comp. Ex. 4-5 | Comp. Ex. 4-6 | Comp. Ex. 4-7 | Comp. Ex. 4-8 | Comp. Ex. 4-9 |
| Cured product evaluation | Surface smoothness | Index | 109 | 112 | 114 | 111 | 117 | 100 | 108 | 102 | 103 |
| | M100 | Index | 93 | 87 | 89 | 88 | 84 | 100 | 89 | 95 | 96 |
| | M300 | Index | 93 | 89 | 91 | 90 | 83 | 100 | 89 | 98 | 99 |
| | Tensile strength | Index | 101 | 98 | 99 | 98 | 94 | 100 | 96 | 90 | 92 |
| | Tensile elongation | Index | 100 | 102 | 101 | 99 | 100 | 100 | 98 | 96 | 98 |
| | X-CT | | C | C | C | C | C | C | C | C | C |
| | Orientation | | C | C | C | C | C | C | C | C | C |

[Table 13]

| Table 13: Cured rubber | | | | | | | | |
|---|---|---|---|---|---|---|---|---|
| | | | Units | Example 4-16 | Example 4-17 | Example 4-18 | Comp. Example 4-10 | Comp. Example 4-11 |
| Composition | Rubber composition | Type | | Example 2-3 | Example 2-14 | Example 2-16 | Comp. Example 2-10 | Comp. Example 2-11 |
| | | Amount | pts. by mass | 25 | 25 | 25 | 20.0 | 22.1 |
| | 4th rubber | Natural rubber | pts. by mass | | | | | |
| | | Polyisoprene | pts. by mass | 100 | 100 | 100 | 100 | 100 |
| | | SBR-1 | pts. by mass | | | | | |
| | Additional components | Sulfur | pts. by mass | 1.7 | 1.7 | 1.7 | 1.7 | 1.7 |
| | | Vulcanization accelerator: NOCCELER CZ | pts. by mass | 1.7 | 1.7 | 1.7 | 1.7 | 1.7 |
| | | Vulcanization accelerator: NOCCELER D | pts. by mass | 2 | 2 | 2 | 2 | 2 |
| | | Vulcanizing aid: zinc oxide | pts. by mass | 2.5 | 2.5 | 2.5 | 2.5 | 2.5 |
| | | Vulcanizing aid: stearic acid | pts. by mass | 2 | 2 | 2 | 2 | 2 |
| | | Wax: SUNNOC | pts. by mass | 1.5 | 1.5 | 1.5 | 1.5 | 1.5 |
| | | Stabilizer: NOCRAC 6C | pts. by mass | 2 | 2 | 2 | 2 | 2 |
| Cured product evaluation | Surface smoothness | | Index | 86 | 88 | 95 | 107 | 100 |
| | M100 | | Index | 113 | 109 | 107 | 92 | 100 |
| | M300 | | Index | 114 | 111 | 104 | 94 | 100 |
| | Tensile strength | | Index | 106 | 103 | 101 | 99 | 100 |
| | Tensile elongation | | Index | 103 | 102 | 99 | 102 | 100 |
| | X-CT | | | A | A | B | C | C |
| | Orientation | | | A | A | A | C | C |

**[0259]**

[Table 14]

| Table 14: Cured rubber | | | | | | | | | | |
|---|---|---|---|---|---|---|---|---|---|---|
| | | | Units | Example 4-19 | Example 4-20 | Example 4-21 | Example 4-22 | Example 4-23 | Example 4-24 | Example 4-25 |
| Composition | Rubber composition | Type | | Example 2-3 | Example 2-14 | Example 2-15 | Example 2-16 | Example 2-17 | Example 2-18 | Example 2-19 |
| | | Amount | pts. by mass | 25 | 25 | 40 | 25 | 20 | 25 | 25 |
| | 4th rubber | Natural rubber | pts. by mass | | | | | | | |
| | | Polyisoprene | pts. by mass | | | | | | | |
| | | SBR-1 | pts. by mass | 100 | 100 | 100 | 100 | 100 | 100 | 100 |
| | Additional components | Sulfur | pts. by mass | 1.7 | 1.7 | 1.7 | 1.7 | 1.7 | 1.7 | 1.7 |
| | | Vulcanization accelerator: NOCCELER CZ | pts. by mass | 1.7 | 1.7 | 1.7 | 1.7 | 1.7 | 1.7 | 1.7 |
| | | Vulcanization accelerator: NOCCELER D | pts. by mass | 2 | 2 | 2 | 2 | 2 | 2 | 2 |
| | | Vulcanizing aid: zinc oxide | pts. by mass | 2.5 | 2.5 | 2.5 | 2.5 | 2.5 | 2.5 | 2.5 |
| | | Vulcanizing aid: stearic acid | pts. by mass | 2 | 2 | 2 | 2 | 2 | 2 | 2 |
| | | Wax: SUNNOC | pts. by mass | 1.5 | 1.5 | 1.5 | 1.5 | 1.5 | 1.5 | 1.5 |
| | | Stabilizer: NOCRAC 6C | pts. by mass | 2 | 2 | 2 | 2 | 2 | 2 | 2 |

(continued)

Table 14: Cured rubber

| | | Units | Example 4-19 | Example 4-20 | Example 4-21 | Example 4-22 | Example 4-23 | Example 4-24 | Example 4-25 |
|---|---|---|---|---|---|---|---|---|---|
| Cured product evaluation | Surface smoothness | Index | 83 | 97 | 86 | 91 | 89 | 92 | 93 |
| | M100 | Index | 111 | 104 | 109 | 112 | 114 | 108 | 107 |
| | M300 | Index | 117 | 105 | 110 | 113 | 114 | 109 | 110 |
| | Tensile strength | Index | 109 | 104 | 102 | 104 | 105 | 103 | 103 |
| | Tensile elongation | Index | 104 | 100 | 102 | 104 | 102 | 103 | 101 |
| | X-CT | | A | A | A | A | A | A | A |
| | Orientation | | A | A | A | A | A | A | A |

[Table 15]

| Table 15: Cured rubber | | | | | | | |
|---|---|---|---|---|---|---|---|
| | | | Units | Comp. Ex. 4-12 | Comp. Ex. 4-13 | Comp. Ex. 4-14 | Comp. Ex. 4-15 |
| Composition | Rubber composition | Type | | Comp. Ex. 2-12 | Comp. Ex. 2-13 | Comp. Ex. 2-14 | Comp. Ex. 2-15 |
| | | Amount | pts. by mass | 20 | 20 | 22.1 | 22.1 |
| | 4th rubber | Natural rubber | pts. by mass | | | | |
| | | Polyisoprene | pts. by mass | | | | |
| | | SBR-1 | pts. by mass | 100 | 100 | 100 | 100 |
| | Additional components | Sulfur | pts. by mass | 1.7 | 1.7 | 1.7 | 1.7 |
| | | Vulcanization accelerator: NOCCELER CZ | pts. by mass | 1.7 | 1.7 | 1.7 | 1.7 |
| | | Vulcanization accelerator: NOCCELER D | pts. by mass | 2 | 2 | 2 | 2 |
| | | Vulcanizing aid: zinc oxide | pts. by mass | 2.5 | 2.5 | 2.5 | 2.5 |
| | | Vulcanizing aid: stearic acid | pts. by mass | 2 | 2 | 2 | 2 |
| | | Wax: SUNNOC | pts. by mass | 1.5 | 1.5 | 1.5 | 1.5 |
| | | Stabilizer: NOCRAC 6C | pts. by mass | 2 | 2 | 2 | 2 |
| Cured product evaluation | Surface smoothness | | Index | 107 | 111 | 100 | 105 |
| | M100 | | Index | 94 | 91 | 100 | 96 |
| | M300 | | Index | 92 | 93 | 100 | 98 |
| | Tensile strength | | Index | 98 | 99 | 100 | 97 |
| | Tensile elongation | | Index | 101 | 102 | 100 | 98 |
| | X-CT | | | C | C | C | C |
| | Orientation | | | C | C | C | C |

[0259]

[Table 16]

Table 16: Cured rubber

| | | | Units | Example 4-26 | Example 4-27 | Example 4-28 | Example 4-29 | Example 4-30 | Example 4-31 | Example 4-32 | Example 4-33 | Example 4-34 | Example 4-35 | Example 4-36 |
|---|---|---|---|---|---|---|---|---|---|---|---|---|---|---|
| Composition | Rubber com-position | Type | | Example 2-1 | Example 2-2 | Example 2-3 | Example 2-4 | Example 2-5 | Example 2-6 | Example 2-20 | Example 2-21 | Example 2-22 | Example 2-23 | Example 2-24 |
| | | Amount | pts. by mass | 40 | 38.6 | 25 | 23.6 | 20 | 18.6 | 16.7 | 15.2 | 25 | 25 | 25 |
| | 4th rubber | Natural rubber | pts. by mass | 80 | 80 | 90 | 90 | 95 | 95 | 95.8 | 95.8 | 90 | 90 | 90 |
| | | Polyisoprene | pts. by mass | | | | | | | | | | | |
| | | SBR-1 | pts. by mass | | | | | | | | | | | |
| | Additional components | Sulfur | pts. by mass | 1.7 | 1.7 | 1.7 | 1.7 | 1.7 | 1.7 | 1.7 | 1.7 | 1.7 | 1.7 | 1.7 |
| | | Vulcanization accelerator: NOCCELER CZ | pts. by mass | 1.7 | 1.7 | 1.7 | 1.7 | 1.7 | 1.7 | 1.7 | 1.7 | 1.7 | 1.7 | 1.7 |
| | | Vulcanization accelerator: NOCCELER D | pts. by mass | 2 | 2 | 2 | 2 | 2 | 2 | 2 | 2 | 2 | 2 | 2 |
| | | Vulcanizing aid: zinc oxide | pts. by mass | 2.5 | 2.5 | 2.5 | 2.5 | 2.5 | 2.5 | 2.5 | 2.5 | 2.5 | 2.5 | 2.5 |
| | | Vulcanizing aid: stearic acid | pts. by mass | 2 | 2 | 2 | 2 | 2 | 2 | 2 | 2 | 2 | 2 | 2 |
| | | Wax: SUN-NOC | pts. by mass | 1.5 | 1.5 | 1.5 | 1.5 | 1.5 | 1.5 | 1.5 | 1.5 | 1.5 | 1.5 | 1.5 |
| | | Stabilizer: NO-CRAC 6C | pts. by mass | 2 | 2 | 2 | 2 | 2 | 2 | 2 | 2 | 2 | 2 | 2 |

(continued)

| Table 16: Cured rubber | | | | | | | | | | | | | |
|---|---|---|---|---|---|---|---|---|---|---|---|---|---|
| | | Units | Example 4-26 | Example 4-27 | Example 4-28 | Example 4-29 | Example 4-30 | Example 4-31 | Example 4-32 | Example 4-33 | Example 4-34 | Example 4-35 | Example 4-36 |
| Cured product evaluation | Surface smoothness | Index | 84 | 90 | 85 | 89 | 84 | 91 | 83 | 91 | 87 | 85 | 83 |
| | M100 | Index | 115 | 107 | 114 | 109 | 117 | 110 | 117 | 108 | 116 | 115 | 118 |
| | M300 | Index | 116 | 111 | 119 | 109 | 120 | 113 | 119 | 109 | 118 | 117 | 119 |
| | Tensile strength | Index | 103 | 101 | 102 | 103 | 104 | 102 | 102 | 101 | 105 | 106 | 103 |
| | Tensile elongation | Index | 103 | 104 | 101 | 103 | 105 | 103 | 104 | 102 | 102 | 105 | 102 |
| | X-CT | | A | A | A | A | A | A | A | A | A | A | A |
| | Orientation | | A | A | A | A | A | A | A | A | A | A | A |

[Table 17]

| Table 17: Cured rubber | | | | | | | | | | | | | | | |
|---|---|---|---|---|---|---|---|---|---|---|---|---|---|---|---|
| | | | Units | Example 4-37 | Example 4-38 | Example 4-39 | Example 4-40 | Example 4-41 | Example 4-42 | Example 4-43 | Example 4-44 | Example 4-45 | Example 4-46 | Example 4-47 | Example 4-48 |
| Composition | Rubber composition | Type | | Example 2-25 | Example 2-26 | Example 2-27 | Example 2-28 | Example 2-29 | Example 2-30 | Example 2-31 | Example 2-32 | Example 2-33 | Example 2-34 | Example 2-35 | Example 2-36 |
| | | Amount | pts. by mass | 25 | 25 | 25 | 25 | 25 | 25 | 25 | 25 | 25 | 25 | 16.1 | 12.8 |
| | 4th rubber | Natural rubber | pts. by mass | 90 | 90 | 90 | 90 | 90 | 90 | 90 | 90 | 90 | 90 | 93.6 | 95.9 |
| | | Polyisoprene | pts. by mass | | | | | | | | | | | | |
| | | SBR-1 | pts. by mass | | | | | | | | | | | | |
| | Additional components | Sulfur | pts. by mass | 1.7 | 1.7 | 1.7 | 1.7 | 1.7 | 1.7 | 1.7 | 1.7 | 1.7 | 1.7 | 1.7 | 1.7 |
| | | Vulcanization accelerator: NOCCELER CZ | pts. by mass | 1.7 | 1.7 | 1.7 | 1.7 | 1.7 | 1.7 | 1.7 | 1.7 | 1.7 | 1.7 | 1.7 | 1.7 |
| | | Vulcanization accelerator: NOCCELER D | pts. by mass | 2 | 2 | 2 | 2 | 2 | 2 | 2 | 2 | 2 | 2 | 2 | 2 |
| | | Vulcanizing aid: zinc oxide | pts. by mass | 2.5 | 2.5 | 2.5 | 2.5 | 2.5 | 2.5 | 2.5 | 2.5 | 2.5 | 2.5 | 2.5 | 2.5 |
| | | Vulcanizing aid: stearic acid | pts. by mass | 2 | 2 | 2 | 2 | 2 | 2 | 2 | 2 | 2 | 2 | 2 | 2 |
| | | Wax: SUNNOC | pts. by mass | 1.5 | 1.5 | 1.5 | 1.5 | 1.5 | 1.5 | 1.5 | 1.5 | 1.5 | 1.5 | 1.5 | 1.5 |
| | | Stabilizer: NOCRAC 6C | pts. by mass | 2 | 2 | 2 | 2 | 2 | 2 | 2 | 2 | 2 | 2 | 2 | 2 |

(continued)

Table 17: Cured rubber

| | | Units | Example 4-37 | Example 4-38 | Example 4-39 | Example 4-40 | Example 4-41 | Example 4-42 | Example 4-43 | Example 4-44 | Example 4-45 | Example 4-46 | Example 4-47 | Example 4-48 |
|---|---|---|---|---|---|---|---|---|---|---|---|---|---|---|
| Cured product evaluation | Surface smoothness | Index | 85 | 84 | 83 | 82 | 86 | 84 | 85 | 86 | 85 | 85 | 86 | 85 |
| | M100 | Index | 115 | 117 | 115 | 118 | 116 | 116 | 118 | 115 | 117 | 116 | 116 | 115 |
| | M300 | Index | 121 | 117 | 120 | 119 | 118 | 120 | 120 | 116 | 121 | 117 | 118 | 116 |
| | Tensile strength | Index | 104 | 104 | 102 | 105 | 101 | 103 | 102 | 106 | 102 | 100 | 104 | 102 |
| | Tensile elongation | Index | 102 | 104 | 104 | 103 | 101 | 105 | 103 | 103 | 104 | 102 | 106 | 103 |
| | X-CT | | A | A | A | A | A | A | A | A | A | A | A | A |
| | Orientation | | A | A | A | A | A | A | A | A | A | A | A | A |

INDUSTRIAL APPLICABILITY

The rubber composition of the disclosure allows molded articles with satisfactory physical properties to be formed, and it can therefore be suitably applied for a wide range of purposes including industrial machinery parts, general machine parts, automobile/railway/vehicle/ship/aerospace-related parts, electronic and electrical components, construction and civil engineering materials, daily household items, sports and leisure goods, wind power generation case members, and container and packaging materials.

## Claims

1. A rubber composition comprising cellulose nanofibers, a first rubber and a second rubber, wherein: the first rubber is unmodified liquid rubber and the second rubber is modified liquid rubber.

2. The rubber composition according to claim 1, wherein at 38°C, the ratio $\eta 2/\eta 1$ of the viscosity $\eta 2$ of the second rubber with respect to the viscosity $\eta 1$ of the first rubber is 1.2 to 160.

3. The rubber composition according to claim 1 or 2, wherein the number-average molecular weight of the second rubber is 4,500 to 100,000.

4. The rubber composition according to claim 1 or 2, which comprises the first rubber at 5 parts by mass to 300 parts by mass with respect to 100 parts by mass of the second rubber.

5. The rubber composition according to claim 1 or 2, which comprises the first rubber at 5 parts by mass to 100 parts by mass with respect to 100 parts by mass of the cellulose nanofibers.

6. The rubber composition according to claim 1 or 2, which comprises the second rubber at 10 parts by mass to 300 parts by mass with respect to 100 parts by mass of the cellulose nanofibers.

7. The rubber composition according to claim 1 or 2, which comprises the second rubber at 5 mass% to 60 mass%.

8. The rubber composition according to claim 1 or 2, wherein the first rubber comprises an aromatic vinyl monomer unit.

9. The rubber composition according to claim 1 or 2, wherein the second rubber is maleic anhydride-modified liquid polyisoprene.

10. The rubber composition according to claim 1 or 2, which further comprises a dispersing agent.

11. The rubber composition according to claim 10, wherein the dispersing agent is nonionic.

12. The rubber composition according to claim 1 or 2, which further comprises a third rubber.

13. The rubber composition according to claim 12, wherein the third rubber is natural rubber.

14. The rubber composition according to claim 1 or 2, which is a dried body.

15. A method for producing a rubber composition according to claim 1 or 2, the method comprising:

    a first step in which cellulose nanofibers are mixed with the first rubber to obtain a preliminary composition, and
    a second step in which the preliminary composition is mixed with the second rubber to obtain a rubber composition.

16. A method for producing a rubber composition according to claim 1 or 2, the method comprising:

    a first step in which the first rubber is mixed with the second rubber to obtain a preliminary composition, and
    a second step in which the preliminary composition is mixed with the cellulose nanofibers to obtain a rubber composition.

**17.** The method according to claim 15, wherein the third rubber is further mixed in the second step.

**18.** A method for producing a rubber composition according to claim 12, the method comprising:

a step of mixing cellulose nanofibers and the first rubber to obtain a preliminary composition,
a step of mixing the preliminary composition and the second rubber to obtain a dried body, and
a step of mixing the dried body and a third rubber to obtain a rubber composition.

**19.** A method for producing a rubber composition according to claim 12, the method comprising:

a step of mixing the first rubber and the second rubber to obtain a preliminary composition,
a step of mixing the preliminary composition and the cellulose nanofibers to obtain a dried body, and
a step of mixing the dried body and a third rubber to obtain a rubber composition.

**20.** A dried body that comprises a rubber composition according to claim 1 or 2.

**21.** A method for producing a rubber composition, the method comprising a step of mixing the dried body according to claim 20 with a third rubber to obtain a rubber composition.

**22.** The method according to claim 17, wherein the third rubber is natural rubber.

**23.** The method according to claim 18, wherein the third rubber is natural rubber.

**24.** The method according to claim 19, wherein the third rubber is natural rubber.

**25.** The method according to claim 21, wherein the third rubber is natural rubber.

**26.** A rubber composite which is a kneaded blend of a rubber composition according to claim 1 or 2 and a fourth rubber.

**27.** A cured rubber product, which is a cured product of a rubber composite according to claim 26.

**28.** A tire comprising a cured rubber product according to claim 27.

**29.** A rubber vibration isolator comprising a cured rubber product according to claim 27.

**30.** A shoe outsole comprising a cured rubber product according to claim 27.

**31.** A conveyor belt comprising a cured rubber product according to claim 27.

**INTERNATIONAL SEARCH REPORT**

International application No. **PCT/JP2024/041322**

**A. CLASSIFICATION OF SUBJECT MATTER**

***C08L 15/00***(2006.01)i; ***C08J 3/20***(2006.01)i; ***C08K 7/02***(2006.01)i; ***C08L 1/00***(2006.01)i; ***C08L 1/02***(2006.01)i; ***C08L 7/00***(2006.01)i; ***C08L 9/06***(2006.01)i; ***C08L 21/00***(2006.01)i

FI: C08L15/00; C08K7/02; C08L9/06; C08L21/00; C08L7/00; C08L1/00; C08J3/20 B CEP; C08J3/20 CEQ; C08L1/02

According to International Patent Classification (IPC) or to both national classification and IPC

**B. FIELDS SEARCHED**

Minimum documentation searched (classification system followed by classification symbols)

C08L15/00; C08J3/20; C08K7/02; C08L1/00; C08L1/02; C08L7/00; C08L9/06; C08L21/00

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-6551 A (TOYO TIRE & RUBBER CO., LTD.) 13 January 2011 (2011-01-13) | 1-31 |
| A | WO 2022/215614 A1 (THE YOKOHAMA RUBBER CO., LTD.) 13 October 2022 (2022-10-13) | 1-31 |
| A | WO 2015/178485 A1 (THE YOKOHAMA RUBBER CO., LTD.) 26 November 2015 (2015-11-26) | 1-31 |
| A | JP 2019-147877 A (THE YOKOHAMA RUBBER CO., LTD.) 05 September 2019 (2019-09-05) | 1-31 |
| A | JP 2020-41076 A (SUMITOMO RUBBER INDUSTRIES, LTD.) 19 March 2020 (2020-03-19) | 1-31 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **22 January 2025** | **04 February 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/041322**

**C. DOCUMENTS CONSIDERED TO BE RELEVANT**

| Category* | Citation of document, with indication, where appropriate, of the relevant passages | Relevant to claim No. |
|---|---|---|
| P, X | JP 2024-61608 A (SUMITOMO RUBBER INDUSTRIES, LTD.) 07 May 2024 (2024-05-07) claim1, table 4, MB2-3, table 6, example 2-3 | 1-4, 6, 7, 9, 12, 14, 20, 21, 27, 28 |
| P, A | | 5, 8, 10, 11, 13, 15-19, 22-26, 29-31 |
| E, X | JP 2024-165318 A (ASAHI KASEI CORP.) 28 November 2024 (2024-11-28) claims 1, 35-38, examples 1-5 | 1-15, 20, 21, 25-31 |
| E, A | | 16-19, 22-24 |

Form PCT/ISA/210 (second sheet) (July 2022)

**INTERNATIONAL SEARCH REPORT**
**Information on patent family members**

International application No.
**PCT/JP2024/041322**

| Patent document cited in search report | Publication date (day/month/year) | Patent family member(s) | Publication date (day/month/year) |
|---|---|---|---|
| JP 2011-6551 A | 13 January 2011 | (Family: none) | |
| WO 2022/215614 A1 | 13 October 2022 | CN 117083333 A | |
| WO 2015/178485 A1 | 26 November 2015 | US 2017/0183483 A1 | |
| | | DE 112015002409 B | |
| | | CN 106459507 A | |
| JP 2019-147877 A | 05 September 2019 | US 2020/0392309 A1 | |
| | | CN 111670216 A | |
| JP 2020-41076 A | 19 March 2020 | EP 3623416 A1 | |
| JP 2024-61608 A | 07 May 2024 | EP 4357155 A2 | |
| JP 2024-165318 A | 28 November 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020041076 A
- JP 2019147877 A
- JP 4012283 B
- JP 60035006 A
- JP 60035007 A
- JP 60035008 A
- JP 5155930 A
- JP 3163088 A
- US 5272236 A
- JP 2016172859 A
- FR 107


### Non-patent literature cited in the description


- **HIROKAWA SHOTEN**. Japanese Pharmacopeia
- The Japan Wood Research Society. 2000, 92-97